(19) Europäisches Patentamt / European Patent Office / Office européen des brevets

(11) EP 4 431 204 A1

(12) **EUROPEAN PATENT APPLICATION**

(43) Date of publication:
**18.09.2024 Bulletin 2024/38**

(21) Application number: **24162869.2**

(22) Date of filing: **12.03.2024**

(51) International Patent Classification (IPC):
***B22F 1/052*** *(2022.01)* ***B33Y 70/00*** *(2020.01)*
***C22C 1/04*** *(2023.01)* ***C22C 21/02*** *(2006.01)*
*B22F 10/14 (2021.01)* *B33Y 10/00 (2015.01)*
*B22F 1/103 (2022.01)* *B22F 10/68 (2021.01)*

(52) Cooperative Patent Classification (CPC):
(C-Sets available)
**B33Y 70/00; B22F 1/052; C22C 1/0416; C22C 21/02;** B22F 1/103; B22F 10/14; B22F 10/68; B33Y 10/00 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.03.2023 JP 2023040034**

(71) Applicant: **Ricoh Company, Ltd.**
**Tokyo 143-8555 (JP)**

(72) Inventors:
- **SOGAME, Junjiroh**
  **Tokyo, 143-8555 (JP)**
- **MIYATA, Shimpei**
  **Tokyo, 143-8555 (JP)**
- **YAMADA, Saori**
  **Tokyo,, 143-8555 (JP)**
- **MIYAZAKI, Kohsuke**
  **Tokyo, 143-8555 (JP)**
- **SATOH, Shinichiroh**
  **Tokyo, 143-8555 (JP)**

(74) Representative: **SSM Sandmair**
**Patentanwälte Rechtsanwalt**
**Partnerschaft mbB**
**Joseph-Wild-Straße 20**
**81829 München (DE)**

# (54) ALUMINIUM POWDER FOR FORMING 3D OBJECTS AND METHOD FOR PRODUCING 3D OBJECT

(57) A powder for forming 3D objects includes a group of particles having an identical composition. The group of the particles includes 50% by mass or greater of aluminum. An oxygen content of the group of the particles is 950 ppm or less. A volume-based particle size frequency distribution of the powder for forming 3D objects has a peak top in a particle diameter range of 40 μm or greater and 70 μm or less, and a peak top in a particle diameter range of 10 μm or greater and 30 μm or less. A ratio (a frequency (%) of the peak top in the particle diameter range of 40 μm or greater and 70 μm or less)/(a frequency (%) of the peak top in the particle diameter range of 10 μm or greater and 30 μm or less) is 1.5 or greater.

FIG.1A

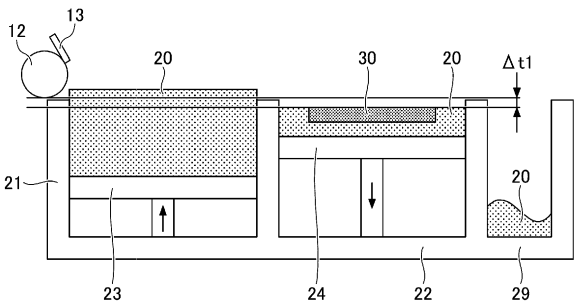




Processed by Luminess, 75001 PARIS (FR)

(Cont. next page)

(52) Cooperative Patent Classification (CPC): (Cont.)

C-Sets
B22F 2998/10, B22F 10/14, B22F 3/1021

## Description

BACKGROUND OF THE INVENTION

1. Field of the Invention

The disclosures herein generally relate to a powder for forming 3D objects and a method for producing a 3D object.

2. Description of the Related Art

Currently, there are increasing demands for production of 3D objects including metals. As one of the technologies for meeting such demands, for example, 3D objects including metals are sintered.

For example, a method where a powder including, as a main constituent component, small particle-size aluminum particles having a mean particle diameter of 10 μm or less is used to form a sintered compact is disclosed in Japanese Patent No. 4206476.

SUMMARY OF THE INVENTION

In one embodiment, a powder for forming 3D objects includes a group of particles having an identical composition. The group of the particles includes 50% by mass or greater of aluminum. An oxygen content of the group of the particles is 950 ppm or less. A volume-based particle size frequency distribution of the powder for forming 3D objects has a peak top in a particle diameter range of 40 μm or greater and 70 μm or less, and a peak top in a particle diameter range of 10 μm or greater and 30 μm or less. A ratio (a frequency (%) of the peak top in the particle diameter range of 40 μm or greater and 70 μm or less)/(a frequency (%) of the peak top in the particle diameter range of 10 μm or greater and 30 μm or less) is 1.5 or greater.

BRIEF DESCRIPTION OF THE DRAWINGS

Fig. 1A is a schematic view illustrating an example of an operation of a 3D object production apparatus according to one embodiment of the present disclosure;
Fig. 1B is a schematic view illustrating another example of an operation of the 3D object production apparatus according to the embodiment;
Fig. 1C is a schematic view illustrating yet another example of an operation of the 3D object production apparatus according to the embodiment;
Fig. 1D is a schematic view illustrating yet another example of an operation of the 3D object production apparatus according to one embodiment of the present disclosure; and
Fig. 1E is a schematic view illustrating yet another example of an operation of the 3D object production apparatus according to one embodiment of the present disclosure.

DESCRIPTION OF THE PREFERRED EMBODIMENTS

In the following, embodiments of the present invention will be described with reference to the accompanying drawings.

Further, the present invention is not limited to these embodiments, but various variations and modifications may be made without departing from the scope of the present invention.

In the related art, a 3D object cannot be produced at high precision and high sintered density, as a powder including a small particle size aluminum having a mean particle diameter of 10 μm or less is used as disclosed in Japanese Patent No. 4206476.

An object of the present disclosure is to provide a powder for forming 3D objects, with which a 3D object can be formed highly precisely with a high sintered density in production of 3D objects with a powder including aluminum.

According to the present disclosure, a powder for forming 3D objects, with which a 3D object can be formed highly precisely with a high sintered density, can be provided.

(Powder for forming 3D objects)

The present disclosure is directed to a powder for forming 3D objects. The powder includes a group of particles having an identical composition, where the group of the particles includes 50% by mass or greater of aluminum, and has an oxygen content of 950 ppm or less.

A volume-based particle size frequency distribution of the group of the particles of the powder for forming 3D objects has a peak top in a particle diameter range of 40 μm or greater and 70 μm or less, and a peak top in a particle diameter range of 10 μm or greater and 30 μm or less. A ratio (a frequency (%) of the peak top in the particle diameter range of 40 μm or greater and 70 μm or less)/(a frequency (%) of the peak top in the particle diameter range of 10 μm or greater and 30 μm or less) is 1.5 or greater.

Moreover, the powder for forming 3D objects of the present disclosure is preferably a powder of an aluminum alloy including at least one selected from the group consisting of Si, Mg, Bi, Sn, Cu, Fe, and Sb.

Since the above-described powder for forming 3D objects is used in the present disclosure, generation of a liquid phase is facilitated and wettability can be easily controlled.

-Metal-

The metal encompasses metal particles serving as a constituent material of a sintered object. The metal is preferably a metal alloy powder. Examples of the metal include aluminum (Al), magnesium (Mg), titanium (Ti), vanadium (V), chromium (Cr), manganese (Mn), iron (Fe), cobalt (Co), nickel (Ni), copper (Cu), zinc (Zn), yttrium (Y), zirconium (Zr), niobium (Nb), molybdenum (Mo), lead (Pd), silver (Ag), indium (In), tin (Sn), tantalum (Ta), tungsten (W), neodymium (Nd), and alloys of any of the foregoing metals. Among the above-listed examples, aluminum (Al), stainless steel (steel use stainless [SUS]), iron (Fe), copper (Cu), silver (Ag), titanium (Ti), and alloys of any of the foregoing metals are preferred.

The metal preferably includes Al, and more preferably further includes Si or Mg, or both Si and Mg.

The metal may further include at least one metal element selected from the group consisting of Zn, Fe, Mn, Cr, Ti, Zr, Ni, B, V, Sn, Bi, and Cu.

Examples of the aluminum alloy include $AlSi_{10}Mg$, $AlSi_{12}$, $AlSi_7Mg_{0.6}$, $AlSi_3Mg$, $AlSi_9Cu_3$, Scalmalloy, ADC12, and $AlSi_3$. The above-listed examples may be used alone or in combination.

The metal may include a substance other than a metal, but a main constituent component of the metal is preferably a metal. The metal included as a main constituent component means that a mass of a metal included in the metal particles is 50.0% by mass or greater relative to a mass of the metal particles. The mass of the metal in the metal particles is preferably 60.0% by mass or greater, more preferably 70.0% by mass or greater, yet more preferably 80.0% by mass or greater, and particularly preferably 90.0% by mass or greater, relative to a mass of the metal particles.

The powder for forming 3D objects of the present disclosure is not particularly limited, as long as the powder can be used in embodiments of the present disclosure. The powder for forming 3D objects can be produced by any method available in the related art.

Examples of a method for producing aluminum-containing particles as the powder for forming 3D objects of the present disclosure include: grinding where compressive force, impacts, or frictions are applied to solids including aluminum to grind the solids; atomization where a molten metal is sprayed, and quenched to yield a powder; precipitation where a substance dissolved in a liquid is deposited; and a gas-phase reaction where a substance is vaporized and crystallized. Among the above-listed examples, atomization is preferred because spherical particles having a narrow particle size distribution can be obtained. The atomization is not particularly limited, and may be appropriately selected according to the intended purpose. Examples of the atomization include gas atomization, centrifugal atomization, and plasma atomization.

For example, a commercial product may be used for the powder for forming 3D objects of the present disclosure.

Examples of the commercial product used for the powder for forming 3D objects of the present disclosure include, but are not limited to, AlSi10Mg ("Si10Mg40B," "Si10Mg50B," "Si10Mg55B," "Si10Mg60B," and "Si10Mg70B," available from TOYO ALUMINIUM K.K.), AlSi10Mg ("Si10Mg15A," "Si10Mg20A," and "Si10Mg30A" available from TOYO ALUMINIUM K.K.), AlSi5 ("Si5 55B" available from TOYO ALUMINIUM K.K.), AlSi5 ("Si5 20A" available from TOYO ALUMINIUM K.K.), and AlSi12Mg ("Si12Mg20A" available from TOYO ALUMINIUM K.K.).

The "AlSi10Mg" is a symbol used for a material standard of a silicon-based aluminum casting in the JIS.

The chemical composition of "AlSi10Mg" in JIS is typically as presented in Table 1 below, and a melting point of "AlSi10Mg" is approximately 600°C.

Table 1

| Chemical composition of AlSi10Mg (% by mass)/JIS | | | | | | | | | | |
|---|---|---|---|---|---|---|---|---|---|---|
| Cu | Si | Mg | Zn | Fe | Mn | Ni | Ti | Pb | Sn | Al |
| 0.10 or less | 9.0 to 11.0 | 0.20 to 0.45 | 0.10 or less | 0.55 or less | 0.45 or less | 0.05 or less | 0.15 or less | 0.05 or less | 0.05 or less | remaining |

"AlSi5" typically includes 5% by mass of "Si" and 50% by mass or greater of aluminum, and a melting point of "AlSi5" is approximately 640°C.

"AlSi12Mg" typically includes "Al," "Si," and "Mg," where an amount of "Si" is 12% by mass and "Al" constitutes the majority of the amounts of constituent components. "AlSi12Mg" includes 50% by mass or greater of aluminum, and a melting point of "AlSi12Mg" is approximately 590°C.

In the following description, the term "pre-sintered compact" encompasses a compact or solid body obtained by solidifying the powder for forming 3D objects with a resin, but is not yet sintered. The "pre-sintered compact" may be also referred to as a "green compact." It is preferred that excess powder is not deposited on the pre-sintered compact. Moreover, the term "sintered compact" encompasses a compact obtained by sintering the pre-sintered compact. The sintered compact is a 3D object formed by binding the powder for forming 3D objects into one body. The sintered compact is preferably a compact obtained by sintering a resin-removed compact that is a pre-sintered compact from which the resin contained is removed.

(Oxygen content)

Sintering will be described hereinafter through an embodiment where aluminum is used as a metal contained in a group of particles constituting the powder for forming 3D objects. Densification of aluminum is carried out by liquid-phase sintering. During the liquid-phase sintering, a strong oxide coating formed on surfaces of particles including aluminum suppresses generation of a liquid phase to inhibit densification. Therefore, it is important that an oxygen content is sufficiently considered in binder jetting (BJ).

The present inventors have found that the oxygen content of the powder for forming 3D objects, which can facilitate densification, is 950 ppm or less. When the oxygen content of the powder for forming 3D objects is greater than 950 ppm, a resulting sintered compact has a low sintered density.

The oxygen content of the powder for forming 3D objects of the present disclosure can be measured by any oxygen analyzer available in the related art. Examples of the oxygen analyzer include an oxygen analyzer (EMGA-920, available from HORIBA, Ltd.). Moreover, the oxygen content can be measured under the following measuring conditions, which are according to inert gas fusion-nondispersive infrared spectrophotometry.

(Measuring conditions)

Amount of sample measured: 30 mg
Carrier gas: argon
Detection: an oxygen content is calculated from the value measured by a $CO_2$ detector.

(Group of particles having identical composition)

The group of the particles of the powder for forming 3D objects of the present disclosure preferably includes, as subgroups of the particles, at least a first powder and a second powder. The group of the particles of the powder for forming 3D objects of the present disclosure having an "identical composition" means that at least a metal composition of a metal alloy of the first powder and a metal composition of a metal alloy of the second powder are the same, and a difference between a melting point of the first powder and a melting point of the second powder is within 20°C.

A melting point of the aluminum-containing particles used for the powder for forming 3D objects of the present disclosure can be determined by a designated simulation software. With the simulation software, at what temperature and by what percent the aluminum-containing particles are melted can be calculated, and a solidus temperature and a liquidus temperature can be also determined.

Diameters of particles included in the second powder are preferably smaller than diameters of particles included in the first powder. In the following description, the particles included in the first powder may be described as large

particles, and the particles included in the second powder may be described as small particles.

(Peak top)

In order to increase a density of a 3D object, it is important to increase a density of a powder layer formed by a 3D object production apparatus. To this end, a volume-based particle size frequency distribution (particle size distribution) of the particles of the powder for forming a 3D object of the present disclosure has two or more peak tops. The term "peak top" encompasses a peak value (maximum value) of each peak of the frequency distribution. Since the small particles fill the gaps between the large particles, flowability of the powder for forming 3D objects is improved, and a density of a resulting powder layer is increased.

A powder having a small particle size has high aggregation force. In the case where the powders included in the powder for forming 3D objects do not have the identical composition, therefore, a density of a resulting sintered compact is reduced. Aluminum has a low specific gravity. When the powder has a small particle size, particularly a particle size of 30 μm or less, aluminum-containing particles used as the powder are scattered inside a 3D object production apparatus, and a proportion of the powder having a small particle size in an upper layer of a powder layer increases, impairing robustness of a resulting compact. In this case, a liquid phase is unevenly generated, unless the powder for forming 3D objects includes the group of the particles having an identical composition. Accordingly, the group of the particles of the powder for forming 3D objects of the present disclosure is preferably a group of particles having an identical composition.

(Ratio between frequencies of peak tops)

A volume-based particle size frequency distribution of the powder for forming 3D objects of the present disclosure has a peak top in a particle diameter range of 40 μm or greater and 70 μm or less, and a peak top in a particle diameter range of 10 μm or greater and 30 μm or less. A ratio (a frequency (%) of the peak top in the particle diameter range of 40 μm or greater and 70 μm or less)/(a frequency (%) of the peak top in the particle diameter range of 10 μm or greater and 30 μm or less) is 1.5 or greater.

The volume-based particle size frequency distribution of the powder for forming 3D objects of the present disclosure has a peak top in a particle diameter range of 40 μm or greater and 70 μm or less, and a peak top in a particle diameter range of 10 μm or greater and 30 μm or less. When one of the peak tops is present in the particle diameter range of 40 μm or greater and 70 μm or less, desired flowability of the powder for forming 3D objects is obtained, and a uniform powder layer can be formed.

When one of the peak tops of the volume-based particle size frequency distribution of the powder for forming 3D objects is present at a particle diameter of greater than 70 μm, a resulting powder layer may crack so that it is difficult to obtain a sintered compact having a high density and high precision.

When one of the peak tops of the volume-based particle size frequency distribution of the powder for forming 3D objects is present at a particle diameter of less than 40 μm, flowability may be impaired. As a result, a density of a pre-sintered compact may be reduced so that it is difficult to obtain a sintered compact having a high density and high precision.

One of the peak tops of the volume-based particle size frequency distribution of the powder for forming 3D objects is preferably present in the particle diameter range of 50 μm or greater and 60 μm or less. Since one of the peak tops is present in the above-mentioned range, a density of a resulting powder layer is increased so that it is likely to obtain a sintered compact having a high density and high precision.

When another peak top of the volume-based particle size frequency distribution of the powder for forming 3D objects is present at a particle diameter of greater than 30 μm, it may be difficult to increase a density of a pre-sintered compact or increase the number of points where the particles are in contact with one another. As a result, a density of a pre-sintered compact is reduced so that it is difficult to obtain a sintered compact having a high density and high precision.

When another peak top of the volume-based particle size frequency distribution of the powder for forming 3D objects is present at a particle diameter of less than 10 μm, a density of a sintered compact is reduced so that it is difficult to obtain a sintered compact having a high density and high precision. Moreover, an amount of an oxide coating relatively increases, reducing a sintered density. Aggregation between the particles also increases, which impairs flowability.

Another peak top of the volume-based particle size frequency distribution of the powder for forming 3D objects is preferably present in the particle diameter range of 15 μm or greater and 25 μm or less. When another peak top is present in the above-mentioned range, durability against weight stress is improved during removal of a resin to minimize cracking or deformation.

In the volume-based particle size frequency distribution of the powder for forming 3D objects of the present disclosure, the ratio (a frequency (%) of the peak top in the particle diameter range of 40 μm or greater and 70 μm or less)/(a frequency (%) of the peak top in the particle diameter range of 10 μm or greater and 30 μm or less) is 1.5 or

greater, and preferably 2 or greater.

When the ratio is within the above-mentioned range, flowability of the powder for forming 3D objects is improved.

When the ratio is less than 1.5, a difference in the particle size is small in the frequency distribution so that flowability of the powder for forming 3D objects may be impaired. As a result, a powder layer having a high density cannot be formed, and a density of a pre-sintered compact becomes low. Moreover, the number of points where the particles are in contact with one another is small to reduce a density of a pre-sintered compact so that a sintered compact may have a low density or may cause deformation.

(D10, D90, and D50)

D10, D90, and D50 are particle diameters at 10%, 90%, and 50% of the cumulative distribution, respectively. D10 of the powder for forming 3D objects is preferably 10 μm or greater and 45 μm or less, and more preferably 15 μm or greater and 45 μm or less. D90 of the powder for forming 3D objects is preferably 55 μm or greater and 105 μm or less, and more preferably 59 μm or greater and 100 μm or less. Since D10 and D90 are within the above-mentioned ranges, the powder for forming 3D objects has a desired frequency distribution without the frequency distribution becoming too broad.

When D10 is 10 μm or greater and 45 μm or less, aggregation of the particles can be minimized. When D90 is 55 μm or greater and 105 μm or less, cracking of a powder layer is unlikely to occur so that a uniform powder layer can be obtained.

Within the group of the particles of the powder for forming 3D objects of the present disclosure, moreover, it is preferred that an abundance ratio of the particles having a volume mean diameter (D50) of 40 μm or greater and 70 μm or less, more preferably 50 μm or greater and 60 μm or less, is 60% by mass or greater and 95% by mass or less, and preferably 70% by mass or greater and 90% by mass or less. Within the group of the particles of the powder for forming 3D objects of the present disclosure, furthermore, it is preferred that an abundance ratio of the particles having a volume mean diameter (D50) of 12 μm or greater and 30 μm or less, preferably 15 μm or greater and 25 μm or less, and yet more preferably 20 μm or greater and 25 μm or less is 5% by mass or greater and 40% by mass or less, and preferably 10% by mass or greater and 30% by mass or less.

The volume-based particle size frequency distribution of the powder for forming 3D objects of the present disclosure has a peak top in the particle diameter range of 40 μm or greater and 70 μm or less, and a peak top in the particle diameter range of 10 μm or greater and 30 μm or less. Therefore, the powder having the particle size of 40 μm or greater and 70 μm or less can impart flowability to the powder for forming 3D objects so that a uniform powder layer can be formed.

(Moisture content)

A moisture content of the powder for forming 3D objects of the present disclosure is preferably 180 ppm or less. When the moisture content of the powder for forming 3D objects is greater than 180 ppm, flowability of the powder for forming 3D objects is impaired by the liquid bridge force so that an uneven powder layer is formed. In the case where a modeling liquid (liquid binder) is hydrophobic, wettability of the modeling liquid changes so that a strength or precision of a pre-sintered compact is reduced. In selective laser melting (SLM), pores or voids may be formed in a 3D object due to the moisture.

Examples of a method for adjusting the moisture content to 180 ppm or less include a method of heating at a temperature of 200°C or lower as a pretreatment.

The moisture content of the powder for forming 3D objects can be measured by the Karl Fischer titration. For example, a coulometric titration moisture meter (Karl Fischer MKC-610, available from KYOTO ELECTRONICS MANUFACTURING CO., LTD.) may be used for the measurement.

In the case where the moisture content is measured by a coulometric titration moisture meter, a solid evaporator and a titration cell are used in combination. As the solid evaporator, for example, ADP-611 (available from KYOTO ELECTRONICS MANUFACTURING CO., LTD.) may be used.

As a type of the titration cell, the following two-fluid cell may be used.

Anode reagent: KEMAQUA AGE (available from KYOTO ELECTRONICS MANUFACTURING CO., LTD.)
Cathode reagent: KEMAQUA CGE (available from KYOTO ELECTRONICS MANUFACTURING CO., LTD.)

The measuring conditions are set as follows, and 0.2 g or greater of the powder for forming 3D objects is weighed and collected as a sample. The sample is then placed in a solid evaporator to evaporate the moisture inside the sample. The sample is titrated with the reagents to measure the moisture content of the powder for forming 3D objects by a coulometric titration moisture meter.

(Measuring conditions)

Judgement of drift-stability value: 0.1 μg/min
Heating temperature: 200°C

(First powder and second powder)

The powder for forming 3D objects of the present disclosure may include a powder A as a first powder and a powder B as a second powder. In the volume-based particle size frequency distribution of the powder for forming 3D objects, the peak top present in the particle diameter range of 40 μm or greater and 70 μm or less is attributed to the first powder, and the peak top present in the particle diameter range of 10 μm or greater and 30 μm or less is attributed to the second powder. The powder A and the powder B may be produced by mixing using any powder mixer available in the related art.

Moreover, another powder may be mixed with the powder A and the powder B to produce the powder for forming 3D objects of the present disclosure.

A volume mean diameter (D50) of the powder A is preferably 40 μm or greater and 70 μm or less, and more preferably 50 μm or greater and 60 μm or less.

When the volume mean diameter of the powder A is 40 μm or greater, flowability is improved.

When the volume mean diameter of the powder A is 70 μm or less, cracking of a resulting powder layer is unlikely to occur so that a uniform powder layer can be formed.

An abundance ratio of the powder A in the powder for forming 3D objects is preferably 60% by mass or greater and 95% by mass or less, and more preferably 70% by mass or greater and 90% by mass or less. When the abundance ratio of the powder A is 60% by mass or greater, desired flowability is obtained, and a powder layer having a high density can be formed. When the abundance ratio of the powder A is 95% by mass or less, a powder layer having a high density can be formed so that a sintered compact having a high density and high precision can be obtained.

To improve flowability and form a highly dense powder layer, a volume mean diameter (D50) of the powder B is preferably 12 μm or greater and 30 μm or less, more preferably 15 μm or greater and 25 μm or less, and yet more preferably 20 μm or greater and 25 μm or less.

When the volume mean diameter of the powder B is 12 μm or greater, aggregation of the particles can be minimized to achieve desired flowability, and desired robustness of a compact can be achieved. Moreover, the powder having the small particle size can reduce an amount of an oxide coating so that a sintered density of a resulting sintered compact is improved.

When the volume mean diameter of the powder B is 30 μm or less, the particle size of the powder B is differentiated from the particle size of the powder A so that a pre-sintered compact having a high density can be obtained. Moreover, the number of the points where the particles are in contact with one another is increased so that the powder for forming 3D objects is likely to form a sintered compact having a high density and high precision.

When the volume mean diameter of the powder B is 12 μm or greater and 30 μm or less, the number of the points where the particle are in contact with one another is increased so that durability against weight stress during removal of a resin is improved to minimize cracking or deformation. Particularly, sintering of the aluminum is liquid-phase sintering, thus deformation during sintering can be minimized by increasing a density of a pre-sintered compact.

To increase a density of a pre-sintered compact, the abundance ratio of the powder B in the powder for forming 3D objects is preferably 5% by mass or greater and 40% by mass or less, and more preferably 10% by mass or greater and 30% by mass or less.

When the abundance ratio of the powder B in the powder for forming 3D objects is 5% by mass or greater, a high density of a pre-sintered compact and an increase in the number of the points where the particles are in contact with one another can be achieved so that a sintered compact having a high density and high precision can be obtained.

When the abundance ratio of the powder B is 40% by mass or less, flowability is imparted to the powder for forming 3D objects, and a powder layer having a high density can be formed.

Therefore, the powder for forming 3D objects preferably includes a first powder including particles having a volume mean diameter of 40 μm or greater and 70 μm or less, and a second powder including particles having a volume mean diameter of 12 μm or greater and 30 μm or less in a manner that an abundance ratio of the powder A is 60% by mass or greater and 95% by mass or less, and the abundance ratio of the powder B is 5% by mass or greater and 40% by mass or less in the group of the particles of the powder for forming 3D objects.

The volume-based particle diameter, volume mean diameter, and frequency distribution (particle size distribution) of the particles included in the powder for forming 3D objects of the present disclosure can be measured by any particle size analyzer available in the related art. Examples of the particle size analyzer include a laser diffraction particle

size distribution analyzer (e.g., LS 13 320 Particle Size Analyzer, available from Beckman Coulter, Inc., and Microtrac MT3000II, available from MicrotracBELL Corporation). The laser diffraction particle size distribution analyzer (LS 13 320 Particle Size Analyzer) is used particularly for the measurement of a two-peak particle size distribution.

In the case where the particle size distribution (frequency distribution) of the group of the particles of the powder for forming 3D objects of the present disclosure is measured by LS 13 320 Particle Size Analyzer as a laser diffraction particle size distribution analyzer, for example, 1.0 g of the powder for forming 3D object is collected, the collected powder is dispersed in ethanol serving as a dispersion medium, and volume-based particle diameters of the dispersed particles of the powder are measured to measure D10, D50, and D90 of the powder for forming 3D objects.

In the case where volume-based particle diameters of particles of the powder A and volume-based particle diameters of particles of the powder B are measured by Microtrac MT3000II as a laser diffraction particle size distribution analyzer, for example, 1.0 g of the powder A and 1.0 g of the powder B are each collected, and volume-based particle diameters D10, D50, and D90 of each of the collected powder A and the collected powder B are measured by a dry measuring method.

As peak tops for the powder for forming 3D objects of the present disclosure, a particle diameter or frequency (%) at a peak point (a maximum value) of each peak on a curve of a frequency distribution (particle size distribution) of the powder for forming 3D objects presented on a graph is used.

Moreover, it is preferred that 88% or greater of the particles of the first powder have sphericity of 0.95 or greater, and less than 86% of the particles of the second powder have sphericity of 0.95 or greater.

The powder A imparts flowability to the powder for forming 3D objects. Conversely, the powder B reduces flowability of the powder for forming 3D objects. Aluminum has a small specific gravity. Thus, a powder of aluminum is likely to scatter. Scattering of the powder becomes significant when the powder has a small particle size. Therefore, the sphericity of the particles of the powder B is varied from the sphericity of the particles of the powder A so that the scattering is minimized. The particles of the powder B fill the gaps between the particles of the powder A during removal of a resin where the resin is removed after forming a pre-sintered compact, minimizing cracking or deformation during the removal of the resin.

The sphericity of the particles of the powder A and powder B, and ratios of the particles of the powder A and powder B having a certain sphericity can be measured by any particle size analyzer available in the related art. Examples of the particle size analyzer include a morphological particle size distribution analyzer (Morphologi 4, available from Malvern Panalytical Ltd.).

When the sphericity of the particles of the powder used is measured by a morphological particle size distribution analyzer (Morphologi 4, available from Malvern Panalytical Ltd.), for example, 1 mg of a sample is weighed and collected. The collected sample is dispersed at 5 bar for 20 msec, and an image of the dispersed particles of the sample is captured by Morphologi 4. The sphericity and the ratios are measured from the obtained image.

The powder A preferably has D10 of 28 $\mu$m or greater and 51 $\mu$m or less, and the powder B preferably has D90 of 25 $\mu$m or greater and 60 $\mu$m or less.

When the powder A and the powder B satisfy the above-mentioned ranges, flowability of the powder for forming 3D objects is improved.

An oxygen content of the powder A is preferably 600 ppm or less, and more preferably 300 ppm or less.

An oxygen content of the powder B is preferably 1,300 ppm or less, and more preferably 1,000 ppm or less.

When the oxygen content of the powder A is 600 ppm or less, an aluminum liquid phase can be generated from the powder A that is a powder having a large particle size.

When the oxygen content of the powder B is 1,300 ppm or less, an aluminum liquid phase can be generated, while a shape of a 3D object is maintained.

(Kit for forming 3D objects)

A kit for forming 3D objects of the present disclosure includes the powder for forming 3D objects of the present disclosure and a modeling liquid (a liquid binder) including a resin and an organic solvent. The kit for forming 3D objects may further include other components, such as a powder removal liquid, as necessary.

Moreover, the kit for forming 3D objects may include the powder for forming 3D objects and the modeling liquid in the state where the powder and the modeling liquid are each independently present. The kit for forming 3D objects is not limited to an embodiment where a modeling liquid storage, in which the modeling liquid is accommodated, and a 3D object forming powder storage, in which the powder for forming 3D objects is accommodated, are configured as one unit. Even if the modeling liquid and the powder for forming 3D objects are each independently accommodated in separate storage compartments, such an embodiment is included as the kit for forming 3D objects, for example, when use of a combination of the powder for forming 3D objects and the modeling liquid is intended, or when use of a combination of the powder for forming 3D objects and the modeling liquid is substantially induced.

As the powder for forming 3D objects in the kit for forming 3D objects, the same powder as the powder for

forming 3D objects of the present disclosure is preferably used.

<Modeling liquid>

The modeling liquid (liquid binder) includes a resin and an organic solvent. The modeling liquid is substantially free from water. The modeling liquid may further include other components.

The modeling liquid is substantially free from water. In the present specification, the phrase "substantially free from water" encompasses that an amount of water is 10% by mass or less relative to a total amount of the modeling liquid. The amount of the water in the modeling liquid is preferably 5% by mass or less, more preferably 3% by mass or less, and yet more preferably 1% by mass or less. The modeling liquid is particularly preferably free from water. Since the modeling liquid is substantially free from water, solubility of the resin is improved to further reduce a viscosity of a resulting modeling liquid. Moreover, formation of a hydrogel including a large amount of water to surround the resin can be minimized so that an increase in the viscosity of the modeling liquid due to the hydrogen can be avoided. Therefore, the modeling liquid is suitably ejected by inkjet printing.

The phrase "the modeling liquid is substantially free from water" means that water is not actively included as a constituent material of the modeling liquid, or an amount of water in the modeling liquid is within the above-mentioned range, or the amount of water detected by a method available in the related art is equal to or lower than the detection limit.

Since the modeling liquid is substantially free from water, the modeling liquid can be applied even if a material constituting inorganic particles is a highly active metal, i.e., a water-reactive substance, such as aluminum. Once aluminum is brought into contact with water, a film of aluminum hydroxide is formed. If an amount of water is large in a modeling liquid, a sintered density of a resulting sintered compact is reduced. Since the modeling liquid that is substantially free from water is used, reduction in a sintered density of a sintered compact is minimized. It is generally difficult to handle aluminum because aluminum generates hydrogen as aluminum comes into contact with water. Since the modeling liquid that is substantially free from water is used, generation of hydrogen is suppressed during production of a 3D object.

A viscosity of the modeling liquid at 25°C is preferably 5 mPa·s or greater and 50 mPa·s or less, more preferably 5 mPa·s or greater and 40 mPa·s or less, and yet more preferably 5 mPa·s or greater and 30 mPa·s or less. For example, the viscosity can be measured according to JIS K7117. When the viscosity of the modeling liquid is within the above-mentioned range, the modeling liquid is stably ejected to improve bending strength of a pre-sintered compact, and size precision is improved.

A surface tension of the modeling liquid at 25°C is preferably 40 mN/m or less, and more preferably 10 mN/m or greater and 30 mN/m or less. For example, the surface tension can be measured by DY-300 available from Kyowa Interface Science Co., Ltd. When the surface tension of the modeling liquid is within the above-mentioned range, the modeling liquid is stably ejected to improve bending strength of a pre-sintered compact, and size precision is improved.

-Resin-

The resin included in the modeling liquid functions as a binder. Therefore, the resin preferably has high affinity to a base, and exhibits a high adhesion effect. The above-described resin adheres to a base to further enhance a strength of a resulting 3D object and to improve solvent resistance.

The resin included in the modeling liquid is not particularly limited, except that the resin is soluble in the modeling liquid. The resin preferably has low solubility in water, but is soluble in an organic solvent.

The resin included in the modeling liquid is not particularly limited, except that water solubility of the resin is 0.5 (g/100g-$H_2O$) or less (0.5 g or less of the resin is dissolved in 100 g of water at 25°C). Examples of the resin include acrylic resins, acrylic polyol resins, polyester resins, epoxy resins, polyol resins, urethane resins, polyether resins, polyvinyl butyral resins, polyvinyl acetal resins, polyvinyl chloride resins, polyvinyl acetate resins, paraffin-based resins, olefin-based resins, and ethyl cellulose.

Moreover, the resin is not particularly limited, except that the resin is soluble in the modeling liquid. The resin may be a homopolymer or a heteropolymer polymer (copolymer), or a modified polymer, or a polymer in which any functional group in the related art is introduced. The above-listed examples may be used alone or in combination.

The resin included in the modeling liquid is preferably a resin where 95% by mass or greater, more preferably 97% by mass or greater of the resin is thermally decomposed when the resin is heated from 30°C to 550°C. The phrase "the resin is thermally decomposed" means that random degradation of a principle chain occurs or depolymerization occurs at a terminal of a molecular chain so that the resin is removed by vaporization, oxidative degradation, or combustion. The thermal decomposition can be measured by a thermogravimetry-differential thermal analyzer (TG-DTA). Specifically, the resin is heated from 30°C to 550°C at 10°C/min in the atmosphere or a nitrogen atmosphere, the temperature is retained at 550°C for 2 hours after reaching 550°C, and a reduction in mass before and after the heating is determined.

A glass transition temperature (Tg) of the resin in the modeling liquid is preferably 0°C or higher, more preferably

10°C or higher, and yet more preferably 20°C or higher. Moreover, the glass transition temperature (Tg) of the resin is preferably 100°C or lower, more preferably 90°C or lower, and yet more preferably 80°C or lower.

A softening point of the resin in the modeling liquid is preferably 70°C or higher, more preferably 80°C or higher, and yet more preferably 90°C or higher. Moreover, the softening point of the resin is preferably 150°C or lower, more preferably 140°C or lower, and yet more preferably 130°C or lower.

A number average molecular weight (Mn) of the resin in the modeling liquid is preferably 5,000 or greater and 50,000 or less, and more preferably 10,000 or greater and 30,000 or less.

The resin in the modeling liquid preferably includes at least one structural unit selected from the group consisting of a structural unit represented by the following structural formula (1) and a structural unit represented by the following structural formula (2). The term "structural unit" encompasses a partial structure within a molecular structure of a resin derived from at least one polymerizable compound.

Examples of the resin in the modeling liquid include polyvinyl acetate resins, partially saponified polyvinyl acetate resins, and polyvinyl butyral resins. The above-listed resins may be used alone or in combination. The above-listed resins may be selected from commercial products, or may be appropriately synthesized. The partially saponified polyvinyl acetate resin is a resin, in which part of a polyvinyl acetate resin is saponified.

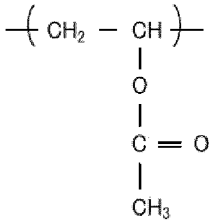

Structural Formula (1)

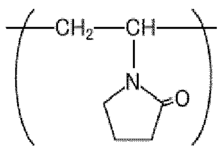

Structural Formula (2)

In the case where the resin in the modeling liquid includes the structural unit represented by the structural formula (1), the resin including the structural unit represented by the structural formula (1) is preferably hydrophobic. The resin including the structural unit represented by the structural formula (1) is preferably soluble in the organic solvent in the modeling liquid, but is preferably insoluble in water.

The resin including the structural unit represented by the structural formula (1) may or may not include one or more structural units represented by other than the structural formula (1). In the case where the resin including the structural unit represented by the structural formula (1) further includes a structural unit represented by other than the structural formula (1), for example, the resin including the structural unit represented by the structural formula (1) preferably further includes a structural unit represented by the following structural formula (3) and/or a structural unit represented by the following structural formula (4).

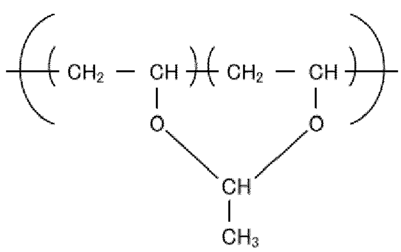

Structural Formula (3)

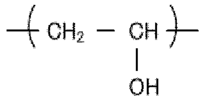

Structural Formula (4)

In the case where the resin including the structural unit represented by the structural formula (1) includes the structural unit represented by the structural formula (3), solubility of the resin in the organic solvent is improved because the structural unit represented by the structural formula (3) is also hydrophobic.

In the case where the resin including the structural unit represented by the structural formula (1) further includes the structural unit represented by the structural formula (4), affinity of the resin to metal particles in a powder layer, to which the modeling liquid is applied, is improved owing to a hydroxyl group in the structural unit represented by the structural formula (4).

The polyvinyl acetate resin includes the structural unit represented by the structural formula (1), but is substantially free from the structural unit represented by the structural formula (3) and the structural unit represented by the structural formula (4).

The partially saponified polyvinyl acetate resin includes the structural unit represented by the structural formula (1) and the structural unit represented by the structural formula (4), but is substantially free from the structural unit represented by the structural formula (3).

The polyvinyl butyral resin is a resin including the structural unit represented by the structural formula (1) and the structural unit represented by the structural formula (3) or a resin including the structural unit represented by the structural formula (1), the structural unit represented by the structural formula (3), and the structural unit represented by the structural formula (4).

The resin in the modeling liquid may be selected from commercial products. Examples of the commercial products include polyvinyl butyral (BM-5, available from SEKISUI CHEMICAL CO., LTD.), a vinyl acetate- vinyl chloride copolymer (SOLBIN A, available from Nisshin Chemical Industry Co., Ltd.), polyacrylic polyol (ACRYDIC WFU-580, available from DIC Corporation, etc.), polyester polyol (POLYLITE OD-X-668, available from DIC Corporation; ADEKA NEWACE YG-108, available from ADEKA CORPORATION, etc.), polybutadiene polyol (GQ-1000, available from Nippon Soda Co., Ltd., etc.), polyvinyl butyral, polyvinyl acetal (S-LEC BM-2 and KS-1, available from SEKISUI CHEMICAL CO., LTD.; Mowital B20H available from KURARY CO., LTD., etc.), acrylic polyol (6AN-6000, available from Taisei Fine Chemical Co., Ltd.), and ethyl cellulose (ETHOCEL, available from NISSHIN-KASEI CO., LTD.).

An amount of the resin in the modeling liquid is not particularly limited, and may be appropriately selected according to the intended purpose. The amount of the resin is preferably 1.0% by mass or greater and 50% by mass or less, and more preferably 10% by mass or greater and 30% by mass or less, relative to a total amount of the modeling liquid. When the amount of the resin is 1.0% by mass or greater and 50% by mass or less, a resulting 3D object has adequate strength, and an increase in viscosity of the modeling liquid or gelation of the modeling liquid can be avoided to ensure desired liquid storage stability and viscosity stability.

-Organic solvent (first organic solvent)-

The organic solvent in the modeling liquid is not particularly limited, except that the organic solvent can dissolve the resin. The organic solvent may be appropriately selected according to the intended purpose.

Examples of the organic solvent in the modeling liquid include aliphatic compounds, aromatic compounds, ketones, esters, and sulfoxides.

Examples of the aliphatic compounds in the modeling liquid include alcohol and ethylene glycol.

Examples of the aromatic compounds in the modeling liquid include toluene and xylene.

Examples of the ketones in the modeling liquid include acetone and methyl ethyl ketone.

Examples of the esters in the modeling liquid include butyl acetate, ethyl acetate, propylene acetate, methyl acetate, and diethyl succinate.

Examples of the sulfoxides in the modeling liquid include dimethyl sulfoxide.

An amount of the organic solvent in the modeling liquid is preferably 30% by mass or greater and 90% by mass or less, and 50% by mass or greater and 80% by mass or less, relative to a total amount of the modeling liquid. When the amount of the organic solvent in the modeling liquid is 30% by mass or greater and 90% by mass or less, solubility of the resin can be improved to improve strength of a resulting 3D object. Moreover, drying of the modeling liquid at a nozzle can be minimized during idling (standing) of an apparatus to minimize clogging of the nozzle or jet failures.

A viscosity of the organic solvent in the modeling liquid at 25°C is preferably 5.0 mPa·s or greater and 50.0 mPa·s or less, and more preferably 8.0 mPa·s or greater and 30.0 mPa·s or less. For example, the viscosity can be measured according to JIS K7117.

A boiling point of the organic solvent in the modeling liquid is high, preferably 150°C or higher, and more preferably 180°C or higher. When the organic solvent has a high boiling point, drying of the modeling liquid is minimized.

The organic solvent in the modeling liquid is not particularly limited. Examples of the organic solvent include γ-butyrolactone (boiling point: 204°C), propylene carbonate (boiling point: 242°C), cyclohexanone (boiling point: 155.6°C), diethylene glycol dimethyl ether (boiling point: 162°C), and triethylene glycol dimethyl ether (boiling point: 216°C). Other examples of the organic solvent include n-octane, m-xylene, solvent naphtha, diisobutyl ketone, 3-heptanone, 2-octanone, acetyl acetone, butyl acetate, amyl acetate, n-hexyl acetate, n-octyl acetate, ethyl butyrate, ethyl valerate, ethyl caprylate, ethyl octanoate, ethyl acetoacetate, ethyl 3-ethoxypropionate, diethyl oxalate, diethyl maloate, diethyl succinate, diethyl adipate, bis-2-ethylhexyl maleate, triacetin, tributyrin, propylene glycol monomethyl ether acetate, ethylene glycol monobutyl ether acetate, dibutyl ether, 1,2-dimethoxybenzene, 1,4-dimethoxybenzene, diethylene glycol monobutyl ether, diethylene glycol dimethyl ether, triethylene glycol dimethyl ether, 2-methoxy-1-methylethyl acetate, γ-butyrolactone, propylene carbonate, cyclohexanone, and butyl cellosolve. The above-listed examples may be used alone or in combination.

In the case where the resin including the structural unit represented by the structural formula (1) is used, an organic solvent used in combination is not particularly limited. For example, the organic solvent used in combination is preferably an organic solvent including at least one structure selected from the group consisting of an alkoxy group, an ether bond, and an ester bond, more preferably an organic solvent including an ether bond, and particularly preferably alkylene glycol dialkyl ether. When the above-mentioned organic solvents are used, solubility of the resin including the structural unit represented by the structural formula (1) is improved further. The above-mentioned "alkylene glycol dialkyl ether" is a compound represented by R1-(O-R2)m-OR3, where R1 and R3 are each independently a C1-C5 alkyl group that may have a straight-chain structure or a branched-chain structure, preferably a C1 or C2 alkyl group; R2 is a C2-C5 alkylene group that may have a straight-chain structure or a branched-chain structure, preferably a C2 or C3 alkylene group; and m is an integer of 1 or greater and 5 or less, more preferably 2 or 3.

Specific examples of the alkylene glycol dialkyl ethers include diethylene glycol dimethyl ether, triethylene glycol dimethyl ether, diethylene glycol ethyl methyl ether, and diethylene glycol butyl methyl ether. Among the above-listed examples, diethylene glycol dimethyl ether and triethylene glycol dimethyl ether are preferred, and triethylene glycol dimethyl ether is more preferred.

In the case where the resin including the structural unit represented by the structural formula (2) is used, an organic solvent used in combination is preferably a polar solvent. Specifically, the organic solvent used in combination is preferably at least one selected from the group (component 1) consisting of cyclic esters (lactones), cyclic ketones, and alkylene glycol monoalkyl ethers, and more preferably at least one selected from the component 1 and at least one selected from the group (component 2) consisting of alkylene glycol dialkyl ethers. When the above-mentioned organic solvents are used, solubility of the resin including the structural unit represented by the structural formula (2) is improved further. In view of further improvement of solubility of the resin including the structural unit represented by the structural formula (2), the component 1 is preferably the group consisting of cyclic esters (lactones) and cyclic ketones. Specific examples of the organic solvents included in the component 1, which is the group consisting of cyclic esters (lactone), cyclic ketones, and alkylene glycol monoalkyl ethers, include γ-butyrolactone, propylene carbonate, and cyclohexanone.

Specific examples of the component 2, which is the group consisting of alkylene glycol dialkyl ethers, include diethylene glycol dimethyl ether, triethylene glycol dimethyl ether, diethylene glycol ethylmethyl ether, and diethylene glycol butylmethyl ether. Among the above-listed examples, diethylene glycol dimethyl ether and triethylene glycol dimethyl ether are preferred. The "alkylene glycol monoalkyl ethers" are compounds represented by R4-(O-R5)n-OH, where R4 is a C1-C5 alkyl group that may have a straight-chain structure or a branched-chain structure; R5 is a C2-C5 alkylene group that may have a straight-chain structure or a branched-chain structure; and n is an integer of 1 or greater and 5 or less.

-Other components-

Other components included in the modeling liquid may be appropriately selected according to the intended purpose, considering various conditions, such as a system used to apply the modeling liquid, frequency of use, and an amount of the modeling liquid used. In the case where the modeling liquid is applied by inkjet printing, for example, other components may be selected to avoid any components that may cause clogging of a nozzle head etc., in an inkjet printer.

Examples of the above-mentioned other components include preservatives, antiseptic agents, stabilizers, pH regulators, surfactants, desiccants, viscosity modifiers, penetrants, defoamers, antifungal agents, and colorants.

A preparation method for the modeling liquid is not particularly limited, and may be appropriately selected according to the intended purpose. Examples of the preparation method include a method where a resin and optionally the above-mentioned other components are added to an organic solvent and the resulting mixture is mixed to dissolve the resin.

A viscosity of the modeling liquid at 25°C is preferably 5 mPa·s or greater and 50 mPa·s or less, and more preferably 10 mPa·s or greater and 25 mPa·s or less.

When the viscosity of the modeling liquid is within the above-mentioned range, the modeling liquid is stably ejected from a modeling liquid applicator, such as an inkjet head, so that size precision of a 3D object is improved.

(Method for producing a 3D object and 3D object production apparatus)

The method for producing a 3D object of the present disclosure includes forming a powder layer using the powder for forming 3D objects of the present disclosure, applying a modeling liquid to the powder layer, and repeating the formation of the powder layer and the application of the modeling liquid to form a multilayer stack. The modeling liquid includes a resin and an organic solvent, and the modeling liquid is substantially free from water.

The application of the modeling liquid preferably includes ejecting the modeling liquid towards the powder layer by inkjet printing.

The method for producing a 3D object may further include other steps, as necessary.

The 3D object production apparatus according to the present disclosure includes a powder layer forming device configured to form a powder layer with the powder for forming 3D objects of the present disclosure, a modeling liquid applicator configured to apply a modeling liquid (a liquid binder) to the powder layer, and a layer stacking member configured to sequentially repeat the operations of the powder layer forming device and the modeling liquid applicator to form a multilayer stack. The 3D object production apparatus may further include other units, members, or devices, as necessary.

The method for producing a 3D object is performed by the 3D object production apparatus. The formation of a powder layer is performed by the powder layer forming device. The application of the modeling liquid is performed by the modeling liquid applicator. The layer stacking is performed by the layer stacking member.

<Formation of powder layer and powder layer forming device>

The formation of a powder layer in the method for producing a 3D object of the present disclosure is a step that includes formation of a powder layer using the powder for forming 3D objects. The formation of a powder layer is performed by the powder layer forming device of the 3D object production apparatus.

Specifically, a powder layer is formed on a support (a modeling stage) of the 3D object production apparatus.

A method for arranging the powder for forming 3D objects on the support to form a powder layer is not particularly limited, and may be appropriately selected according to the intended purpose. Examples of the method include: a method using any counter-rotating mechanism (counter roller) available in the related art; a method of spreading the powder with a member, such as a brush, a roller, and a blade; a method of pressing a surface of a pile of the powder with a press member to spread the powder; and a method using any additive manufacturing device available in the related art.

In the case where a powder layer is formed using a powder layer forming device, such as a counter-rotating mechanism (counter roller), a brush, a blade, and a press member, for example, a powder layer is formed in the following manner.

A powder is placed on a support using a counter-rotating mechanism (counter roller), a brush, a roller, a blade, or a press member. The support is disposed in a manner that the support can move up and down to slide along an inner wall of an outer frame (may be referred to as a "mold," a "hollow cylinder," or a "cylindrical structure"). In the case where the support used can move up and down within the outer frame, the support is set at a position just below an upper edge of an opening of the outer frame (i.e., the position that is lower than the upper edge by a thickness of one layer of a powder layer formed), and a powder is placed on the support. As a result, a thin layer of the powder can be placed on the support.

A thickness of the powder layer is not particularly limited, and may be appropriately selected according to the intended purpose. For example, an average thickness of a single layer of the powder layer is preferably 30 μm or greater and 500 μm or less, and more preferably 60 μm or greater and 300 μm or less.

When the average thickness of the powder layer is 30 μm or greater, strength of a compact formed by applying the modeling liquid to the powder is improved, and deformation of the compact that may be caused during steps to follow, such as sintering, can be minimized. When the average thickness of the powder layer is 500 μm or less, size precision of an object derived from a compact forming by applying the modeling liquid to the powder can be improved.

An average thickness of the powder layer is not particularly limited. The average thickness of the powder layer can be measured according to any method available in the related art.

The powder supplied by the powder layer forming device may be accommodated in a powder storage. The powder storage is a member in which a powder is accommodated, such as a container. Examples of the powder storage include storage tanks, bags, cartridges, and tanks.

<Application of modeling liquid and modeling liquid applicator>

The application of the modeling liquid in the method for producing a 3D object of the present disclosure is a step that includes application of the modeling liquid to the powder layer formed through the formation of a powder layer.

The application of the modeling liquid is performed by the modeling liquid applicator of the 3D object production

apparatus.

As a specific method for applying the modeling liquid to the powder layer, a method for ejecting the modeling liquid to apply the modeling liquid to the powder layer is preferred. The method for ejecting the modeling liquid is not particularly limited, and may be appropriately selected according to the intended purpose. Examples of the method for ejecting include dispensing, spraying, and inkjet printing.

In the case where the application of the modeling liquid is performed by inkjet printing, a modeling liquid applicator configured to eject the modeling liquid to apply the modeling liquid to the powder layer is an inkjet head having one or more nozzles from which the modeling liquid is ejected. As the inkjet head, an inkjet head of any inkjet printer available in the related art is suitably used.

The modeling liquid supplied to the modeling liquid applicator includes a resin and an organic solvent, and is substantially free from water. The modeling liquid may be accommodated in a modeling liquid storage. The modeling liquid storage is a member where the modeling liquid is accommodated, such as a container. Examples of the modeling liquid storage include storage tanks, bags, cartridges, and tanks.

<Layer stacking and layer stacking member>

The layer stacking in the method for producing a 3D object of the present disclosure includes repeating the formation of a powder layer and the application of the modeling liquid to form a multilayer stack.

The layer stacking is performed by the layer stacking member of the 3D object production apparatus, where the layer stacking member is configured to sequentially repeat operations of the powder layer forming device and the modeling liquid applicator to form a multilayer stack.

The "multilayer stack" is a structure, in which two or more powder layers each having a region where the modeling liquid is applied are stacked. The structure may or may not include a 3D object holding a certain three-dimensional shape inside the structure.

The layer stacking includes a step that includes formation of a powder layer using the powder for forming 3D objects of the present disclosure (formation of powder layer), and a step that includes application of a modeling liquid to the powder layer (application of modeling liquid). As a result, a region to which the modeling liquid is applied is formed within the powder layer. The layer stacking further includes a step that includes formation of a powder layer using the powder for forming 3D objects, in the same manner as above, on the powder layer having the region to which the modeling liquid is applied (formation of powder layer), and a step that includes application of a modeling liquid to the powder layer (application of modeling liquid). As a result, a region to which the modeling liquid is applied is formed within the freshly formed powder layer. The region to which the modeling liquid is applied formed within the uppermost powder layer is continued to the region to which the modeling liquid is applied formed within the powder layer below the uppermost powder layer. Therefore, the region, to which the modeling liquid is applied, having a thickness equivalent to two layers of the powder layers is obtained.

<Heating>

The method for producing a 3D object of the present disclosure preferably further includes heating the multilayer stack.

The heating is a step that includes heating the multilayer stack formed through the layer stacking to form a compact (solidified body or compacted body). The heating is performed by a heater.

"Solidified" or "compacted" means to secure a certain shape. The "compact" encompasses a structure including a 3D object holding a certain three-dimensional shape. Moreover, a compact encompasses a structure that has not yet been subjected to a process where a powder that does not constitute a 3D object is removed (removal of excess powder).

A heating temperature for the heating is preferably higher than a softening point of the resin included in the modeling liquid. Since the heating is performed at the above-mentioned heating temperature, the resin functions as a binder to bind the inorganic particles within the region to which the modeling liquid is applied, so that an pre-sintered object, such as a compact and a pre-sintered compact derived from the compact, can be formed.

The heater is not particularly limited, and may be appropriately selected according to the intended purpose. Examples of the heater include drying machines and constant temperature and humidity chambers.

<Removal of excess powder>

The method for producing a 3D object of the present disclosure preferably further includes removal of excess powder. The removal of the excess powder is a step that includes removal of the excess powder deposited on the compact formed through the heating.

The removal of the excess powder is a step that includes removal of the excess powder deposited on the

compact to obtain a pre-sintered compact. The removal of the excess powder is performed by an excess powder remover.

The excess powder remover is not particularly limited, and may be appropriately selected according to the intended purpose. Examples of the removal of the excess powder by the excess powder remover include air blowing by an air blower, and dipping in a removal liquid.

The "pre-sintered compact" has been subjected to a process where the excess powder that does not constitute a compact is removed (removal of excess powder), and is a 3D object that can hold a certain three-dimensional shape during the removal of the excess powder. It is preferred that the pre-sintered compact is substantially free from the excess powder deposited on the pre-sintered compact.

The removal of the excess powder preferably includes a step where excess powder is removed from the compact by air blowing, or a step where the compact is dipped in a removal liquid to remove excess powder, or both steps. The removal of the excess powder more preferably includes both of the above-described steps.

The compact that has been subjected to the heating is in the state where the compact is buried in the excess powder that is the powder to which the modeling liquid has not been applied. As the buried compact is taken out from the excess powder, the excess powder is still deposited on a surface or inner area of the compact. It is difficult to simply remove the deposited excess powder from the compact. It is particularly difficult to remove the excess powder if the compact has a complex surface configuration, or the compact has an internal structure including channels, etc. A pre-sintered object formed by typical binder jetting does not have high strength. If pressure of air blowing by an air blower is high, therefore, an object may be collapsed.

The compact formed using the modeling liquid is formed by the binder function of the resin so that bending strength is improved and the compact has sufficient strength to bear the pressure of the air blowing. As the bending strength of the compact, the three point bending stress of the compact is preferably 3 MPa or greater, and more preferably 5 MPa or greater.

-Removal liquid-

The removal liquid includes an organic solvent, and may further include other components, as necessary. In order to distinguish from the organic solvent in the modeling liquid, the organic solvent in the modeling liquid may be referred to as a first organic solvent, and the organic solvent in the removal liquid may be referred to as a second organic solvent.

Examples of the second organic solvent include ketone, halogen, alcohol, ester, ether, hydrocarbon, glycol, glycol ether, glycol ester, pyrrolidone, amide, amine, and carbonic acid ester.

Examples of the ketone in the removal liquid include acetone, methyl ethyl ketone, diethyl ketone, methyl propyl ketone, methyl isobutyl ketone, methyl amyl ketone, cyclohexanone, isophorone, acetophenone, and diacetone alcohol.

Examples of the halogen in the removal liquid include methylene chloride, trichloroethylene, perchloroethylene, HCFC141-b, HCFC-225, 1-bromopropane, chloroform, and ortho-dichlorobenzene.

Examples of the alcohol in the removal liquid include methanol, ethanol, butanol, isobutanol, isopropyl alcohol, n-propyl alcohol, tert-butanol, sec-butanol, 1,3-butanediol, 1,4-butanediol, 2-ethylhexanol, and benzyl alcohol.

Examples of the ester in the removal liquid include methyl acetate, ethyl acetate, butyl acetate, isobutyl acetate, sec-butyl acetate, methoxybutyl acetate, 3-methoxybutyl acetate, 3-methoxy-3-methylbutylacetate, ethyl-3-ethoxypropionate, amyl acetate, n-propyl acetate, isopropyl acetate, methyl lactate, ethyl lactate, butyl lactate, propylene glycol monomethyl ether acetate, propylene glycol monomethyl ether propionate, ethyl 3-ethoxypropionate, and dibasic ester (DBE).

Examples of the ether in the removal liquid include dimethyl ether, ethyl methyl ether, diethyl ether, ethylene oxide, tetrahydrofuran, furan, benzofuran, diisopropyl ether, methyl cellosolve, ethyl cellosolve, butyl cellosolve, 1,4-dioxane, methyl tert-butyl ether (MTBE), ethylene glycol dimethyl ether, diethylene glycol dimethyl ether, ethylene glycol diethyl ether, diethylene glycol diethyl ether, triethylene glycol dimethyl ether, diethylene glycol dibutyl ether, dipropylene glycol dimethyl ether, and dipropylene glycol monomethyl ether.

Examples of the hydrocarbon in the removal liquid include benzene, toluene, xylene, solvent naphtha, n-hexane, isohexane, cyclohexane, ethylcyclohexane, methylcyclohexane, cyclohexene, cycloheptane, cyclopentane, heptane, pentamethylbenzene, pentane, methylcyclopentane, n-heptane, isooctane, n-decane, n-pentane, isopentane, mineral spirits, dimethyl sulfoxide, and linear alkyl benzene.

Examples of the glycol in the removal liquid include ethylene glycol, diethylene glycol, triethylene glycol, propylene glycol, and dimethoxytetraethylene glycol.

Examples of the glycol ester in the removal liquid include ethylene glycol monoethyl ether acetate, and diethylene glycol monobutyl ether acetate.

Examples of the glycol ether in the removal liquid include methyl carbitol, ethyl carbitol, butyl carbitol, and methyl triglycol.

Examples of the pyrrolidone in the removal liquid include 2-pyrrolidone, N-ethyl-2-pyrrolidone, and N-methyl-2-pyrrolidone.

Examples of the amide in the removal liquid include dimethyl formamide, dimethyl acetoamide, and formamide.

Examples of the amine in the removal liquid include tetramethylethylene diamine, N,N-diisopropylethylamine, ethylenediamine, triethylamine, diethylamine, aniline, pyrrolidine, piperidine, morpholine, pyrrole, pyridine, pyridazine, oxazole, thiazole, and 1,3-dimethyl-2-imidazolidinone.

Examples of the carbonic acid ester in the removal liquid include diethyl carbonate, dimethyl carbonate, propylene carbonate, and ethyl methyl carbonate.

Examples of other components in the removal liquid include surfactants, defoamers, antiseptic antifungal agents, pH regulators, chelate agents, and corrosion inhibitors.

<Drying>

The method for producing a 3D object preferably further includes drying.

The drying is a step that includes drying of the pre-sintered compact to remove a liquid component, such as the removal liquid, remaining in the pre-sintered compact. The drying is performed by a dryer.

The drying may remove the organic matter, as well as the liquid component of the removal liquid included in the pre-sintered compact.

The dryer is not particularly limited, and may be appropriately selected according to the intended purpose. Examples of the dryer include drying machines and constant temperature and humidity chambers available in the related art.

<Removal of resin>

The method for producing a 3D object of the present disclosure preferably further includes removal of a resin, where the compact is heated to remove the resin in the compact.

The removal of a resin is a step that includes heating of the pre-sintered compact to form a resin-removed compact from which the resin is removed. The removal of a resin is performed by a resin remover.

The "resin-removed compact" is a 3D object obtained by removing an organic component, such as the resin, from the pre-sintered compact.

The removal of a resin is performed by the resin remover in the following manner. The pre-sintered compact is heated at a temperature equal to or higher than a thermal decomposition temperature of an organic component, such as the resin, and lower than a melting point or solidus temperature of the metal (e.g., approximately 570°C in case of AlSi10Mg particles) included in the powder for forming 3D objects for a certain period (e.g., 1 hour to 10 hours) to decompose and remove the organic component.

The resin remover is not particularly limited, and may be appropriately selected according to the intended purpose. Examples of the resin remover include sintering furnaces and electric furnaces available in the related art.

<Sintering>

The method for producing a 3D object of the present disclosure preferably further includes heating of the resin-removed compact formed through the removal of the resin to sinter the resin-removed compact.

The sintering is a step that includes heating of the resin-removed compact formed through the removal of the resin to form a sintered compact. The sintering is performed by a sintering machine.

The sintering is performed by the sintering machine in the following manner. The resin-removed compact is heated at a temperature equal to or higher than a solidus temperature (e.g., approximately 570°C in case of AlSi10Mg particles) of a metal included in the powder for forming 3D objects, and lower than a liquidus temperature (e.g., approximately 600°C in case of AlSi10Mg particles) of the metal for a certain period (e.g., 1 hour to 10 hours) to sinter the resin-removed compact.

The sintering machine is not particularly limited, and may be appropriately selected according to the intended purpose. Examples of the sintering machine include sintering furnaces available in the related art. The sintering machine may be identical to the above-described resin remover. Moreover, the removal of the resin and the sintering may be consecutively performed.

<Post-processing>

The method for producing a 3D object preferably further includes post-processing. The post-processing is a step where post-processing is performed on the pre-sintered compact. The post-processing is not particularly limited, and may be appropriately selected according to the intended purpose. Examples of the post-processing include a surface

protection treatment and coating.

The surface protection treatment is a step where a protective layer is formed on the pre-sintered compact obtained by performing the removal of the excess powder on the compact formed through the heating. Since the surface protection treatment is performed, durability is imparted to the compact so that the compact can be used as it is. Examples of the protective layer include a waterproof layer, a weather resistant layer, a light resistant layer, a thermal insulation layer, and a gloss layer.

Examples of a surface protection treatment device used in the surface protection treatment include surface protection treatment devices available in the related art, such as spray devices and coating devices.

<Coating>

The coating is a step where coating is performed on the pre-sintered compact obtained by performing the removal of the excess powder on the compact formed through the heating. As the coating is performed, a desired color can be applied to the pre-sintered compact.

Examples of a coater used in the coating include coating devices available in the related art, such as spray coaters, roller coaters, and brush coaters.

<Process flow of formation of object>

A process flow of formation of an object (modeling) in the method for producing a 3D object of the present disclosure will be described with reference to Figs. 1A to 1E.

Figs. 1A to 1E are schematic views each illustrating an example of an operation of the 3D object production apparatus according to one embodiment of the present disclosure.

The 3D object production apparatus illustrated in Figs. 1A to 1E includes the powder layer forming device, the modeling liquid applicator, and the layer stacking member.

The 3D object production apparatus illustrated in Figs. 1A to 1E includes a supply tank 21, a modeling tank 22, and an excess powder collecting tank 29, where the supply tank 21 includes a supply stage 23, and the modeling tank 22 includes a modeling stage 24. Both the supply stage 23 and the modeling stage 24 are movable up and down.

Fig. 1A is a schematic view illustrating an example of the operation of the 3D object production apparatus according to one embodiment of the present disclosure.

The description of the process flow starts from the state where a first powder layer 30 is formed on the modeling stage 24 of the modeling tank 22. The supply stage 23 of the supply tank 21 is lifted up, and the modeling stage 24 of the modeling tank 22 is lowered. The lowering distance of the modeling stage 24 is set so that a gap (layer-stacking pitch) between the upper surface of the powder layer in the modeling tank 22 and the bottom part (lower tangent) of the leveling member 12 is $\Delta t1$. The gap $\Delta t1$ is preferably from several tens of micrometers to approximately 100 $\mu m$.

The powder layer forming device of the 3D object production apparatus according to one embodiment of the present disclosure, which is illustrated in Fig. 1A, includes the leveling member 12, the supply tank 21, the modeling tank 22, the supply stage 23, and the modeling stage 24.

The leveling member 12 is arranged to leave a gap with the upper plane of the supply tank 21 and the upper plane of the modeling tank 22. When the powder for forming 3D objects 20 is transferred and supplied to the modeling tank 22, and the powder for forming 3D objects 20 is leveled, an upper surface of a resulting powder layer comes to be at a position higher than the upper plane of the supply tank 21 and the upper plane of the modeling tank 22. A powder removing plate 13 is arranged on the leveling member 12 in a manner that the powder removing plate 13 comes into contact with a circumferential surface of the leveling member 12. The powder removing plate 13 is configured to remove the powder for forming 3D objects 20 deposited on the leveling member 12.

Fig. 1B is a schematic view illustrating another example of the operation of the 3D object production apparatus according to one embodiment of the present disclosure.

After setting the lowering distance of the modeling stage 24, the powder for forming 3D objects 20 arranged at the position higher than the upper plane of the supply tank 21 is transferred to the side of the modeling tank 22 by rotating the leveling member 12 in the direction indicated with the arrow so that the powder for forming 3D objects 20 is transferred and supplied to the modeling tank 22 (powder supply).

Fig. 1C is a schematic view illustrating yet another example of the operation of the 3D object production apparatus according to one embodiment of the present disclosure.

The powder for forming 3D objects 20 is further transferred along the direction parallel to the plane of the modeling stage 24 of the modeling tank 22 by the leveling member 12.

Fig. 1D is a schematic view illustrating yet another example of the operation of the 3D object production apparatus according to one embodiment of the present disclosure.

Since the powder for forming 3D objects 20 is transferred along the direction parallel to the plane of the modeling

stage 24 of the modeling tank 22 by the leveling member 12, a powder layer 31 having the predetermined thickness Δt1 is formed on the modeling stage 24 of the modeling tank 22 (leveling). During the leveling, the excess powder for forming 3D objects 20, which has not been used for formation of the powder layer 31, is dropped into the excess powder collecting tank 29. After forming the powder layer 31, the leveling member 12 is moved to the side of the supply tank 21 to return back to the initial position (starting position).

The leveling member 12 is arranged to be movable with a certain distance left between the leveling member 12 and the upper plane of the modeling tank 22, and between the leveling member 12 and the upper plane of the supply tank 21. Since the leveling member 12 can be moved with the certain distance left with the upper planes, the powder for forming 3D objects 20 is transferred into the modeling tank 22 by the leveling member 12, and a powder layer 31 having a uniform thickness h (equivalent to a layer stacking pitch Δt1) can be formed in the modeling tank 22 or on the previously formed powder layer 30. The thickness h of the powder layer 31 and the layer-stacking pitch Δt1 will be described hereinafter without distinguishing the two from each other. The thickness h of the powder layer 31 and the layer-stacking pitch Δt1 encompasses the same thickness and means the same, unless otherwise stated. Moreover, the thickness h of the powder layer 31 may be determined by actually measuring the thickness h of the powder layer 31. In this case, the thickness h is the arithmetic mean of the values of the thickness measured at two or more points.

Fig. 1E is a schematic view illustrating yet another example of the operation of the 3D object production apparatus according to one embodiment of the present disclosure.

The modeling liquid applicator of the 3D object production apparatus according to one embodiment of the present disclosure, which is illustrated in Fig. 1E, is a head 52 of a liquid jet unit.

The liquid stacking member of the 3D object production apparatus according to one embodiment of the present disclosure includes the powder layer forming device and the modeling liquid applicator. The powder layer forming device includes the leveling member 12, the supply tank 21, the modeling tank 22, the supply stage 23, and the modeling stage 24. The modeling liquid applicator includes the head 52 of the liquid jet unit. The liquid stacking member is configured to sequentially repeat operations of the powder layer forming device and the modeling liquid applicator to form a multilayer stack.

After moving the leveling member 12 to the side of the supply tank 21 to return back to the initial position, a modeling liquid 10 is applied to the powder layer 31 by the head 52 of the liquid jet unit to form a powder layer 30 having the desired shape within the powder layer 31. Subsequently, formation of powder layer by the powder layer forming device and application of the modeling liquid by the modeling liquid applicator are sequentially repeated to sequentially form and stack fresh powder layers 30. The freshly formed powder layer 30 and the previously formed powder layer 30 below are stacked together to form one body. Then, the formation of the powder layer and the application of the modeling liquid are sequentially further repeated by the layer stacking member to form a multilayer stack (layer stacking).

Examples

The present disclosure will be concretely described below by way of Examples and Comparative Examples. The present disclosure should not be construed as being limited to these Examples. Preparations and evaluations were each carried out at a temperature of 25°C and humidity of 50%, unless otherwise stated.

Materials of a powder A and a powder B used to produce powders for forming 3D objects (may be referred to as "3D object forming powders" hereinafter) 1 to 34 in Examples and Comparative Examples are as described in Examples 1 to 27 and Comparative Examples 1 to 7, respectively. The 3D object forming powders 1 to 34 were each a mixed powder obtained by mixing the powder A and the powder B.

In the following Examples and Comparative Examples, a volume-based particle diameter, an oxygen content, sphericity, and a moisture content were measured in the following manner.

<Measurement of volume-based particle diameters of powder A and powder B>

Volume-based particle diameters of a powder A and a powder B were measured by a laser diffraction particle size distribution analyzer (Microtrac MT3000II, available from Microtrac Retsch GmbH). The powder A and the powder B used in each of Examples and Comparative Examples were each collected. The collected powder (1.0 g) was measured by a dry measuring method to measure volume-based particle diameters D10, D50, and D90 of each powder. D10, D50, and D90 of each powder are presented in Tables 2-1 to 3-2.

Values of the volume mean diameters of the powder A and the powder B in each of Examples 1 to 27 and Comparative Examples 1 to 7 are values of D50 of the powder A and the powder B.

<Measurement of volume-based particle diameters of 3D object forming powders 1 to 34>

Volume-based particle diameters of the 3D object forming powders 1 to 34 were measured in the following

manner. First, 1.0 g of each of the 3D object forming powders 1 to 34 was collected. The collected powder was dispersed in ethanol serving as a dispersion medium. Volume-based particle diameters of the particles of the powder disposed in the ethanol were measured by a laser diffraction particle size distribution analyzer (LS 13 320 Particle Size Analyzer, available from Beckman Coulter, Inc.). Based on the obtained measurement results, a frequency distribution of each of the 3D object forming powders 1 to 34 was determined.

Two peak tops were observed in the volume-based particle size frequency distribution of each of the 3D object forming powders 1 to 34.

A value of a ratio (frequency (%) of peak top of second peak)/(frequency (%) of peak top of first peak) between the frequencies (%) of the peak tops at the peaks of the volume-based particle size frequency distribution of each of the 3D object forming powders 1 to 34 was presented in Tables 4-1 and 4-2.

Moreover, D10 and D90 of the volume-based particle diameters of each of the 3D object forming powders 1 and 19 to 22 were measured by a laser diffraction particle size distribution analyzer (Microtrac MT3000II, available from Microtrac Retsch GmbH). The results are presented in Tables 4-1 and 4-2.

Melting points of "AlSi10Mg," "AlSi5," and "AlSi12Mg" used as the powder A and the powder B of the 3D object forming powders 1 to 34 were determined by the designated simulation software.

<Oxygen content>

Oxygen contents of the powder A, the powder B, and each of the 3D object forming powders 1 to 34 were measured by an oxygen analyzer (EMGA-920, available from HORIBA, Ltd.). The measurement was performed under the following measuring conditions according to inert gas fusion-nondispersive infrared spectrophotometry. The results are presented in Tables 2-1 to 4-2.

(Measuring conditions)

Amount of sample measured: 30 mg
Carrier gas: argon
Detection: an oxygen content was calculated from the value measured by a $CO_2$ detector.

<Sphericity>

The sphericity of the particles of the powder A and the sphericity of the particles of the powder B were each measured by a morphological particle size distribution analyzer (Morphologi 4, available from Malvern Panalytical Ltd.). As a sample, 1 mg of each of the powder A and the powder B used in Examples and Comparative Examples was weighed and collected. The collected sample was dispersed at 5 bar for 20 msec, and an image of the dispersed particles of the sample was captured. An abundance distribution of the sphericity of the particles of the powder A and an abundance distribution of the sphericity of the particles of the powder B were determined from the images obtained in the above-described manner.

A value of a ratio of the particles having the sphericity of 0.95 or greater within the particles of the powder A or the within the particles of the powder b was presented in Tables 2-1 to 3-2.

<Moisture content>

A moisture content of each of the 3D object forming powders 1 to 34 was measured by the following device according to the Karl Fischer titration.

Coulometric titration Karl Fischer moisture meter (Karl Fischer MKC-610, available from KYOTO ELECTRONICS MANUFACTURING CO., LTD.)
Solid evaporator (ADP-611, available from KYOTO ELECTRONICS MANUFACTURING CO., LTD.)
Titration cell type: two-fluid cell,

Anode reagent: KEMAQUA AGE (available from KYOTO ELECTRONICS MANUFACTURING CO., LTD.)
Cathode reagent: KEMAQUA CGE (available from KYOTO ELECTRONICS MANUFACTURING CO., LTD.)

(Measuring method)

For measurement of the moisture content, the measuring conditions were set as follows, and 0.2 g of each of the 3D object forming powders 1 to 34 was weighed and collected as a sample. The sample was then placed in a solid evaporator to evaporate the moisture inside the sample. The sample was titrated with the reagents to measure the moisture content of each of the 3D object forming powders 1 to 34 by the coulometric titration Karl Fischer moisture meter. The results are presented in Tables 4-1 and 4-2.

(Measuring conditions)

Judgement of drift-stability value: 0.1 μg/min
Heating temperature: 200°C

(Example 1)

<Production of powder for forming 3D objects>

Eighty (80) parts by mass of AlSi10Mg ("Si10Mg55B," available from TOYO ALUMINIUM K.K., volume mean diameter: 55 μm) as a powder A and 20 parts by mass of AlSi10Mg ("Si10Mg20A," available from TOYO ALUMINIUM K.K., volume mean diameter: 23 μm) as a powder B were mixed by a commercially available mixer (turbula mixer, available from Shinmaru Enterprises Corporation) to prepare a powder 1 for forming 3D objects (may be referred as 3D object forming powder 1).
A volume-based particle size frequency distribution of the obtained 3D object forming powder 1 was measured by a laser diffraction particle size distribution analyzer (LS 13 320 Particle Size Analyzer, available from Beckman Coulter, Inc.) to confirm the detail of a two-peak particle size distribution. As a result, the peak tops were present at 18 μm and 57 μm of the volume-based particle diameter, respectively. A ratio ((frequency (%) of the peak top at the volume-based particle diameter of 57 μm)/(frequency (%) of the peak top at the volume-based particle diameter of 18 μm)) of the frequency (%) of the peak top at the volume-based particle diameter of 57 μm to the frequency (%) of the peak top at the volume-based particle diameter of 18 μm was 6.0.
The oxygen content of the 3D object forming powder 1 was measured by the oxygen analyzer (EMGA-920, available from HORIBA, Ltd.), and the result of the measurement was 440 ppm. The moisture content of the 3D object forming powder 1 was measured according to the Karl Fischer titration, and the result of the measurement was 140 ppm. The above-mentioned results are presented in Table 4-1.
Next, a 3D object 1 was produced with the obtained 3D object forming powder 1 in the following manner.

<Production of 3D object and sintered compact>

Ninety-seven (97) parts by mass of dimethyl sulfoxide and 3 parts of an acrylic resin (product name: KC1700P, available from KYOEISHA CHEMICAL Co., Ltd.) were mixed and dispersed by a homomixer for 10 minutes to prepare a modeling liquid.
A 3D object 1 in the size of 70 mm in length × 12 mm in width was produced using the obtained modeling liquid and the 3D object forming powder 1 in the following manner.

(1) First, a powder layer having an average thickness of 100 μm was formed using the 3D object forming powder 1 by the 3D object production apparatus illustrated in Fig. 1 (formation of powder layer).
(2) Next, the modeling liquid was applied onto a surface of the powder layer formed of the 3D object forming powder 1 by one or more nozzles of an inkjet head available in the related art (application of modeling liquid).
(3)-1The processes of (1) and (2) were repeated to sequentially stack powder layers each formed of the 3D object forming powder 1 until a total average thickness reached the predetermined thickness, which was 3 mm, to thereby form a multilayer stack (layer stacking).
(3)-2The multilayer stack was heated at 50°C for 4 hours, followed by at 100°C for 10 hours by a drying machine to dry the multilayer stack to produce a compact.
(3)-3The excess powder of the 3D object forming powder 1 deposited on the compact was removed by air blowing (removal of excess powder) to obtain a pre-sintered compact of a 3D object 1.

<Density of pre-sintered compact of 3D object>

After performing a waterproof treatment on the pre-sintered compact of the 3D object 1, a density of the pre-sintered compact of the 3D object 1 was measured by the Archimedes method.

Specifically, the density of the 3D object was measured in the following manner. A weight X of the pre-sintered compact of the 3D object was measured in the air. In order to prevent penetration of a liquid (pure water) into the pre-sintered compact of the 3D object from gaps or voids of the pre-sintered compact of the 3D object, a waterproof spray (ultra-strong waterproof spray, available from Henkel Japan Ltd.) was applied onto the pre-sintered compact of the 3D object to perform a waterproof treatment. A weight Y of the pre-sintered compact of the 3D object immersed in pure water, the density $\rho_0$ of which was known, was measured. A density $\rho$ of the pre-sintered compact of the 3D object was determined according to the following equation.

$$\rho = (X/(X-Y))\rho_0$$

The measured density was evaluated based on the following evaluation criteria, and the result of the evaluation was presented in Table 5-1. The result of "Fair" or better was judged as being acceptable on practical use.

[Evaluation Criteria]

Very good: The density was 60% or greater.
Good: The density was 57% or greater and less than 60%.
Fair: The density was 54% or greater and less than 57%.
Not good: The density was less than 54%.

<Evaluation of cracking of resin-removed compact of 3D object (pre-sintered compact)>

(4) The pre-sintered compact of the 3D object 1 obtained in (3)-3 was placed between a pair of SUS plates in a manner that edges of the 3D object 1 were each projected from the plates by 15 mm. Then, the pre-sintered compact of the 3D object 1 was heated by a drying machine in a nitrogen atmosphere by increasing the temperature up to 450°C over the period of 2 hours, followed by retaining the temperature at 450°C for 2 hours, to remove the resin included in the 3D object 1 to thereby obtain a resin-removed compact of the 3D object 1.

Then, the drying machine was turned off to gradually return the temperature back to room temperature. The drying machine was open, and whether the resin-removed compact was cracked or not during the removal of the resin was observed and evaluated based on the following evaluation criteria. The result is presented in Table 5-1.

[Evaluation Criteria]

Good: The edge of the resin-removed compact was not warped.
Not good: The edge of the resin-removed compact was warped.

(5) The pre-sintered compact of the 3D object 1 obtained in (3)-3 was heated by a drying machine in a nitrogen atmosphere by increasing the temperature up to 450°C over the period of 2 hours, followed by retaining the temperature at 450°C for 2 hours, to remove the resin included in the 3D object 1 to thereby obtain a resin-removed compact of the 3D object 1. The resin-removed compact was heated at 580°C in vacuum in a sintering furnace to sinter the resin-removed compact. As a result, a sintered compact 1 having a beautiful surface was obtained.

<Sintered density of sintered compact>

(6) The sintered compact 1 obtained in (5) was subjected to an oil impregnation process in the following manner. A beaker was charged with turbine oil. The sintered compact 1 was immersed in the turbine oil. Then, the beaker was placed in a vacuum desiccator, the atmosphere inside the desiccator was vacuumed to the level of from -0.03 MPaG to -0.06 MPaG by a rotary pump, and the beaker was left to stand in the desiccator for approximately 1 hour for deaeration. Then, the air was introduced into the vacuum desiccator, and the sintered compact was taken out from the desiccator,

followed by wiping off the oil to complete the oil impregnation process of the sintered compact.

In a similar manner as the measurement of the density of the pre-sintered compact of the 3D object, a density of the sintered compact 1 was measured according to the Archimedes method. A value obtained by calculating a ratio of the density of the sintered compact 1 to the density of the metal material constituting the sintered compact 1, and converting the ratio into a percentage was determined as a sintered density of the sintered compact 1. The sintered density was evaluated based on the following evaluation criteria. The result is presented in Table 5-1. The result of "Fair" or better was judged as a high sintered density.

[Evaluation Criteria]

Very good: The sintered density was 97% or greater.
Good: The sintered density was 95% or greater and less than 97%.
Fair: The sintered density was 93% or greater and less than 95%.
Not good: The sintered density was less than 93%.

<Variance of sintered density of sintered compact>

Five sintered compacts 1 were produced with the 3D object forming powder 1 under the same conditions, and a value of the standard deviation of the sintered density of the five sintered compacts 1 was calculated, and determined as a variance $\sigma$ of the sintered density of the sintered compact 1.

The variance was evaluated based on the following criteria. The result is presented in Table 5-1. The result of "Fair" or better was judged as a high sintered density.

[Evaluation Criteria]

Good: The variance $\sigma$ of the sintered density was within 0.4.
Fair: The variance $\sigma$ of the sintered density was within 0.8.
Not good: The variance $\sigma$ of the sintered density was within 1.2.

<Evaluation of shrinkage of sintered compact>

(7) The size of the sintered compact obtained in (5) and the size of the pre-sintered compact of the 3D object 1 were each measured by a caliper. The measured sizes were compared and a shrinkage rate from the pre-sintered compact of the 3D object 1 to the sintered compact 1 was calculated.

The shrinkage of the sintered compact 1 was evaluated based on the following evaluation criteria.

The result of the evaluation based on the following evaluation criteria is presented in Table 5-1. The result of "Fair" or better was judged as being acceptable on practical use.

[Evaluation Criteria]

Good: The shrinkage rate was less than 16%.
Fair: The shrinkage rate was 16% or greater and less than 18%.
Not good: The shrinkage rate was 180 or greater.

(Example 2)

A 3D object forming powder 2, a 3D object 2, and a sintered compact 2 were produced in the same manner as in Example 1, except that the powder B was changed to AlSi10Mg ("Si10Mg15A," available from TOYO ALUMINIUM K.K., volume mean diameter: 12 $\mu$m). Measurements of the 3D object forming powder 2, and evaluations of the 3D object 2 and the sintered compact 2 were performed in the same manner as in Example 1. The results are presented in Tables 4-1 and 5-1.

(Example 3)

A 3D object forming powder 3, a 3D object 3, and a sintered compact 3 were produced in the same manner as in Example 1, except that the powder B was changed to 80 parts by mass of AlSi10Mg ("Si10Mg30A," available from TOYO ALUMINIUM K.K., volume mean diameter: 30 μm). Measurements of the 3D object forming powder 3, and evaluations of the 3D object 3 and the sintered compact 3 were performed in the same manner as in Example 1. The results are presented in Tables 4-1 and 5-1.

(Example 4)

A 3D object forming powder 4, a 3D object 4, and a sintered compact 4 were produced in the same manner as in Example 1, except that the powder B was changed to a powder prepared by classifying AlSi10Mg ("Si10Mg20A," available from TOYO ALUMINIUM K.K., volume mean diameter: 23 μm) to have a volume mean diameter of 17 μm. Measurements of the 3D object forming powder 4, and evaluations of the 3D object 4 and the sintered compact 4 were performed in the same manner as in Example 1. The results are presented in Tables 4-1 and 5-1.

(Example 5)

A 3D object forming powder 5, a 3D object 5, and a sintered compact 5 were produced in the same manner as in Example 1, except that the powder B was changed to a powder prepared by classifying AlSi10Mg ("Si10Mg20A," available from TOYO ALUMINIUM K.K., volume mean diameter: 23 μm) to have a volume mean diameter of 14 μm. Measurements of the 3D object forming powder 5, and evaluations of the 3D object 5 and the sintered compact 5 were performed in the same manner as in Example 1. The results are presented in Tables 4-1 and 5-1.

(Example 6)

A 3D object forming powder 6, a 3D object 6, and a sintered compact 6 were produced in the same manner as in Example 1, except that the powder B was changed to a powder prepared by classifying AlSi10Mg ("Si10Mg20A," available from TOYO ALUMINIUM K.K., volume mean diameter: 23 μm) to have a volume mean diameter of 25 μm. Measurements of the 3D object forming powder 6, and evaluations of the 3D object 6 and the sintered compact 6 were performed in the same manner as in Example 1. The results are presented in Tables 4-1 and 5-1.

(Example 7)

A 3D object forming powder 7, a 3D object 7, and a sintered compact 7 were produced in the same manner as in Example 1, except that the powder B was changed to a powder prepared by classifying AlSi10Mg ("Si10Mg20A," available from TOYO ALUMINIUM K.K., volume mean diameter: 23 μm) to have a volume mean diameter of 27 μm. Measurements of the 3D object forming powder 7, and evaluations of the 3D object 7 and the sintered compact 7 were performed in the same manner as in Example 1. The results are presented in Tables 4-1 and 5-1.

(Example 8)

A 3D object forming powder 8, a 3D object 8, and a sintered compact 8 were produced in the same manner as in Example 1, except that the powder A was changed to AlSi10Mg ("Si10Mg40B," available from TOYO ALUMINIUM K.K., volume mean diameter: 40 μm). Measurements of the 3D object forming powder 8, and evaluations of the 3D object 8 and the sintered compact 8 were performed in the same manner as in Example 1. The results are presented in Tables 4-1 and 5-1.

(Example 9)

A 3D object forming powder 9, a 3D object 9, and a sintered compact 9 were produced in the same manner as in Example 1, except that the powder A was changed to AlSi10Mg ("Si10Mg70B," available from TOYO ALUMINIUM K.K., volume mean diameter: 70 μm). Measurements of the 3D object forming powder 9, and evaluations of the 3D object 9 and the sintered compact 9 were performed in the same manner as in Example 1. The results are presented in Tables 4-1 and 5-1.

(Example 10)

A 3D object forming powder 10, a 3D object 10, and a sintered compact 10 were produced in the same manner as in Example 1, except that the powder A was changed to a powder prepared by classifying AlSi10Mg ("Si10Mg50B," available from TOYO ALUMINIUM K.K., volume mean diameter: 50 μm) to have a volume mean diameter of 48 μm. Measurements of the 3D object forming powder 10, and evaluations of the 3D object 10 and the sintered compact 10 were performed in the same manner as in Example 1. The results are presented in Tables 4-1 and 5-1.

(Example 11)

A 3D object forming powder 11, a 3D object 11, and a sintered compact 11 were produced in the same manner as in Example 1, except that the powder A was changed to AlSi10Mg ("Si10Mg50B," available from TOYO ALUMINIUM K.K., volume mean diameter: 50 μm). Measurements of the 3D object forming powder 11, and evaluations of the 3D object 11 and the sintered compact 11 were performed in the same manner as in Example 1. The results are presented in Tables 4-1 and 5-1.

(Example 12)

A 3D object forming powder 12, a 3D object 12, and a sintered compact 12 were produced in the same manner as in Example 1, except that the powder A was changed to AlSi10Mg ("Si10Mg60B," available from TOYO ALUMINIUM K.K., volume mean diameter: 61 μm). Measurements of the 3D object forming powder 12, and evaluations of the 3D object 12 and the sintered compact 12 were performed in the same manner as in Example 1. The results are presented in Tables 4-1 and 5-1.

(Example 13)

A 3D object forming powder 13, a 3D object 13, and a sintered compact 13 were produced in the same manner as in Example 1, except that the powder A was changed to a powder prepared by classifying AlSi10Mg ("Si10Mg60B," available from TOYO ALUMINIUM K.K., volume mean diameter: 61 μm) to have a volume mean diameter of 63 μm. Measurements of the 3D object forming powder 13, and evaluations of the 3D object 13 and the sintered compact 13 were performed in the same manner as in Example 1. The results are presented in Tables 4-1 and 5-1.

(Example 14)

A 3D object forming powder 14, a 3D object 14, and a sintered compact 14 were produced in the same manner as in Example 1, except that the powder A was changed to 59 parts of AlSi10Mg ("Si10Mg55B" having a broad particle size distribution, available from TOYO ALUMINIUM K.K., volume mean diameter: 55 μm), and the powder B was changed to 41 parts of AlSi10Mg (Si10Mg20A having a broad particle size distribution, available from TOYO ALUMINIUM K.K., volume mean diameter: 27 μm). Measurements of the 3D object forming powder 14, and evaluations of the 3D object 14 and the sintered compact 14 were performed in the same manner as in Example 1. The results are presented in Tables 4-1 and 5-1.

(Example 15)

A 3D object forming powder 15, a 3D object 15, and a sintered compact 15 were produced in the same manner as in Example 1, except that the powder A was changed to 60 parts of AlSi10Mg (Si10Mg55B having a broad particle size distribution, available from TOYO ALUMINIUM K.K., volume mean diameter: 55 μm), and the powder B was changed to 40 parts of AlSi10Mg ("Si10Mg20A" having a broad particle size distribution, available from TOYO ALUMINIUM K.K., volume mean diameter: 26 μm). Measurements of the 3D object forming powder 15, and evaluations of the 3D object 15 and the sintered compact 15 were performed in the same manner as in Example 1. The results are presented in Tables 4-1 and 5-1.

(Example 16)

A 3D object forming powder 16, a 3D object 16, and a sintered compact 16 were produced in the same manner as in Example 1, except that the 3D object forming powder produced in the same manner as in Example 1 was left to stand in the atmosphere having a temperature of 40°C and humidity of 70% for 12 hours to adjust the moisture content of the 3D object forming powder to 180 ppm. Measurements of the 3D object forming powder 16, and evaluations of the

3D object 16 and the sintered compact 16 were performed in the same manner as in Example 1. The results are presented in Tables 4-1 and 5-1.

(Example 17)

A 3D object forming powder 17, a 3D object 17, and a sintered compact 17 were produced in the same manner as in Example 1, except that the 3D object forming powder produced in the same manner as in Example 1 was left to stand in the atmosphere having a temperature of 40°C and humidity of 90% for 12 hours to adjust the moisture content of the 3D object forming powder to 205 ppm. Measurements of the 3D object forming powder 17, and evaluations of the 3D object 17 and the sintered compact 17 were performed in the same manner as in Example 1. The results are presented in Tables 4-1 and 5-1.

(Example 18)

A 3D object forming powder 18, a 3D object 18, and a sintered compact 18 were produced in the same manner as in Example 1, except that the powder A was changed to 60 parts of AlSi10Mg (Si10Mg55B, available from TOYO ALUMINIUM K.K., volume mean diameter: 55 μm), the powder B was changed to 40 parts of AlSi10Mg ("Si10Mg20A," available from TOYO ALUMINIUM K.K., volume mean diameter: 23 μm), and the powder A and the powder B were each heated at 350°C for 8 hours, followed by mixing the powder A and the powder B by a turbula mixer. Measurements of the 3D object forming powder 18, and evaluations of the 3D object 18 and the sintered compact 18 were performed in the same manner as in Example 1. The results are presented in Tables 4-1 and 5-1.

(Example 19)

A 3D object forming powder 19, a 3D object 19, and a sintered compact 19 were produced in the same manner as in Example 1, except that the powder A was changed to 60 parts of AlSi10Mg (classified "Si10Mg40B," available from TOYO ALUMINIUM K.K., D50: 40 μm, D10: 28 μm), the powder B was changed to 40 parts of AlSi10Mg (classified "Si10Mg20A," available from TOYO ALUMINIUM K.K., D50: 18 μm, D10: 5 μm), and the powder A and the powder B were mixed by a turbula mixer. Measurements of the 3D object forming powder 19, and evaluations of the 3D object 19 and the sintered compact 19 were performed in the same manner as in Example 1. The results are presented in Tables 4-1 and 5-1.

(Example 20)

A 3D object forming powder 20, a 3D object 20, and a sintered compact 20 were produced in the same manner as in Example 1, except that the powder A was changed to 60 parts of AlSi10Mg (classified "Si10Mg40B," available from TOYO ALUMINIUM K.K., D50: 40 μm, D10: 27 μm), the powder B was changed to 40 parts of AlSi10Mg (classified "Si10Mg20A," available from TOYO ALUMINIUM K.K., D50: 16 μm, D10: 3 μm), and the powder A and the powder B were mixed by a turbula mixer. Measurements of the 3D object forming powder 20, and evaluations of the 3D object 20 and the sintered compact 20 were performed in the same manner as in Example 1. The results are presented in Tables 4-1 and 5-1.

(Example 21)

A 3D object forming powder 21, a 3D object 21, and a sintered compact 21 were produced in the same manner as in Example 1, except that the powder A was changed to 87 parts of AlSi10Mg (classified "Si10Mg70B," available from TOYO ALUMINIUM K.K., D50: 70 μm, D90: 106 μm), the powder B was changed to 13 parts of AlSi10Mg (classified "Si10Mg20A," available from TOYO ALUMINIUM K.K., D50: 23 μm, D90: 44 μm), and the powder A and the powder B were mixed by a turbula mixer. Measurements of the 3D object forming powder 21, and evaluations of the 3D object 21 and the sintered compact 21 were performed in the same manner as in Example 1. The results are presented in Tables 4-1 and 5-1.

(Example 22)

A 3D object forming powder 22, a 3D object 22, and a sintered compact 22 were produced in the same manner as in Example 1, except that the powder A was changed to 90 parts of AlSi10Mg (classified "Si10Mg70B," available from TOYO ALUMINIUM K.K., D50: 70 μm, D90: 106 μm), the powder B was changed to 10 parts of AlSi10Mg (classified "Si10Mg20A," available from TOYO ALUMINIUM K.K., D50: 23 μm, D90: 44 μm), and the powder A and the powder B

were mixed by a turbula mixer. Measurements of the 3D object forming powder 22, and evaluations of the 3D object 22 and the sintered compact 22 were performed in the same manner as in Example 1. The results are presented in Tables 4-1 and 5-1.

(Example 23)

A 3D object forming powder 23, a 3D object 23, and a sintered compact 23 were produced in the same manner as in Example 1, except that the powder A was changed to AlSi10Mg ("Si10Mg55B," available from TOYO ALUMINIUM K.K., sphericity: 88%). Measurements of the 3D object forming powder 23, and evaluations of the 3D object 23 and the sintered compact 23 were performed in the same manner as in Example 1. The results are presented in Tables 4-2 and 5-2.

(Example 24)

A 3D object forming powder 24, a 3D object 24, and a sintered compact 24 were produced in the same manner as in Example 1, except that the powder A was changed to AlSi10Mg ("Si10Mg55B," available from TOYO ALUMINIUM K.K., sphericity: 86%). Measurements of the 3D object forming powder 24, and evaluations of the 3D object 24 and the sintered compact 24 were performed in the same manner as in Example 1. The results are presented in Tables 4-2 and 5-2.

(Example 25)

A 3D object forming powder 25, a 3D object 25, and a sintered compact 25 were produced in the same manner as in Example 1, except that the powder B was changed to AlSi10Mg ("Si10Mg20B," available from TOYO ALUMINIUM K.K., sphericity: 87%). Measurements of the 3D object forming powder 25, and evaluations of the 3D object 25 and the sintered compact 25 were performed in the same manner as in Example 1. The results are presented in Tables 4-2 and 5-2.

(Example 26)

A 3D object forming powder 26, a 3D object 26, and a sintered compact 26 were produced in the same manner as in Example 1, except that the powder B was changed to AlSi10Mg ("Si10Mg20A," available from TOYO ALUMINIUM K.K., sphericity: 86%). Measurements of the 3D object forming powder 26, and evaluations of the 3D object 26 and the sintered compact 26 were performed in the same manner as in Example 1. The results are presented in Tables 4-2 and 5-2.

(Example 27)

A 3D object forming powder 27, a 3D object 27, and a sintered compact 27 were produced in the same manner as in Example 1, except that the powder A was changed to AlSi5 ("Si5 55B," available from TOYO ALUMINIUM K.K.), and the powder B was changed to AlSi5 ("Si5 20A," available from TOYO ALUMINIUM K.K.), and the sintering temperature of the sintered compact 27 was 590°C. Measurements of the 3D object forming powder 27, and evaluations of the 3D object 27 and the sintered compact 27 were performed in the same manner as in Example 1. The results are presented in Tables 4-2 and 5-2.

(Comparative Example 1)

A 3D object forming powder 28, a 3D object 28, and a sintered compact 28 were produced in the same manner as in Example 1, except that the powder B was changed to AlSi10Mg ("Si10Mg10A," available from TOYO ALUMINIUM K.K., volume mean diameter: 11 μm). Measurements of the 3D object forming powder 28, and evaluations of the 3D object 28 and the sintered compact 28 were performed in the same manner as in Example 1. The results are presented in Tables 4-2 and 5-2.

(Comparative Example 2)

A 3D object forming powder 29, a 3D object 29, and a sintered compact 29 were produced in the same manner as in Example 1, except that the powder B was changed to AlSi10Mg ("Si10Mg35A," available from TOYO ALUMINIUM K.K., volume mean diameter: 33 μm). Measurements of the 3D object forming powder 29, and evaluations of the 3D object 29 and the sintered compact 29 were performed in the same manner as in Example 1. The results are presented in Tables 4-2 and 5-2.

(Comparative Example 3)

A 3D object forming powder 30, a 3D object 30, and a sintered compact 30 were produced in the same manner as in Example 1, except that the powder A was changed to AlSi10Mg (classified "Si10Mg40B," available from TOYO ALUMINIUM K.K., volume mean diameter: 38 μm). Measurements of the 3D object forming powder 30, and evaluations of the 3D object 30 and the sintered compact 30 were performed in the same manner as in Example 1. The results are presented in Tables 4-2 and 5-2.

(Comparative Example 4)

A 3D object forming powder 31, a 3D object 31, and a sintered compact 31 were produced in the same manner as in Example 1, except that the powder A was changed to AlSi10Mg (classified "Si10Mg70B," available from TOYO ALUMINIUM K.K., volume mean diameter: 72 μm). Measurements of the 3D object forming powder 31, and evaluations of the 3D object 31 and the sintered compact 31 were performed in the same manner as in Example 1. The results are presented in Tables 4-2 and 5-2.

(Comparative Example 5)

A 3D object forming powder 32, a 3D object 32, and a sintered compact 32 were produced in the same manner as in Example 1, except that the powder A was changed to 60 parts of AlSi10Mg ("Si10Mg55B" having a broad particle size distribution 2, available from TOYO ALUMINIUM K.K., volume mean diameter: 55 μm), and the powder B was changed to 40 parts of AlSi10Mg ("Si10Mg20A" having a broad particle size distribution 2, available from TOYO ALUMINIUM K.K., volume mean diameter: 27 μm). Measurements of the 3D object forming powder 32, and evaluations of the 3D object 32 and the sintered compact 32 were performed in the same manner as in Example 1. The results are presented in Tables 4-2 and 5-2.

(Comparative Example 6)

A 3D object forming powder 33, a 3D object 33, and a sintered compact 33 were produced in the same manner as in Example 1, except that the powder A was changed to 60 parts of AlSi10Mg ("Si10Mg55B," available from TOYO ALUMINIUM K.K., volume mean diameter: 55 μm), the powder B was changed to 40 parts of AlSi10Mg ("Si10Mg20A," available from TOYO ALUMINIUM K.K., volume mean diameter: 23 μm), and the powder A and the powder B were each heated at 360°C for 8 hours, followed by mixing the powder A and the powder B by a turbula mixer. Measurements of the 3D object forming powder 33, and evaluations of the 3D object 33 and the sintered compact 33 were performed in the same manner as in Example 1. The results are presented in Tables 4-2 and 5-2.

(Comparative Example 7)

A 3D object forming powder 34, a 3D object 34, and a sintered compact 34 were produced in the same manner as in Example 1, except that the powder A was changed to 80 parts of AlSi5 ("Si5 55B," available from TOYO ALUMINIUM K.K., D50: 55 μm), the powder B was changed to 20 parts of AlSi12Mg ("Si12Mg20A," available from TOYO ALUMINIUM K.K., D50: 23 μm), the powder A and the powder B were mixed by a turbula mixer, and the sintering temperature of the sintered compact 34 was 565°C. Measurements of the 3D object forming powder 34, and evaluations of the 3D object 34 and the sintered compact 34 were performed in the same manner as in Example 1. The results are presented in Tables 4-2 and 5-2.

Table 2-1

| | 3D object forming powder No. | Powder A | | | | | | | |
|---|---|---|---|---|---|---|---|---|---|
| | | Base | Type | D10 | D50 | D90 | Abundance ratio in 3D object forming powder (mass%) | Ratio of particles having sphericity of 0.95 or greater in powder A | Oxygen content (ppm) |
| Ex. 1 | 1 | AlSi10Mg | 55B | 38 | 55 | 78 | 80% | 90% | 300 |
| Ex. 2 | 2 | AlSi10Mg | 55B | 38 | 55 | 78 | 80% | 90% | 300 |
| Ex. 3 | 3 | AlSi10Mg | 55B | 38 | 55 | 78 | 80% | 90% | 300 |
| Ex. 4 | 4 | AlSi10Mg | 55B | 38 | 55 | 78 | 80% | 90% | 300 |
| Ex. 5 | 5 | AlSi10Mg | 55B | 38 | 55 | 78 | 80% | 90% | 300 |
| Ex. 6 | 6 | AlSi10Mg | 55B | 38 | 55 | 78 | 80% | 90% | 300 |
| Ex. 7 | 7 | AlSi10Mg | 55B | 38 | 55 | 78 | 80% | 90% | 300 |
| Ex. 8 | 8 | AlSi10Mg | 40B | 30 | 40 | 60 | 80% | 90% | 350 |
| Ex. 9 | 9 | AlSi10Mg | 70B | 51 | 70 | 94 | 80% | 90% | 300 |
| Ex. 10 | 10 | AlSi10Mg | Classified 50B | 36 | 48 | 70 | 80% | 90% | 350 |
| Ex. 11 | 11 | AlSi10Mg | 50B | 38 | 50 | 72 | 80% | 90% | 350 |
| Ex. 12 | 12 | AlSi10Mg | 60B | 41 | 61 | 82 | 80% | 90% | 300 |
| Ex. 13 | 13 | AlSi10Mg | Classified 60B | 42 | 63 | 84 | 80% | 90% | 300 |
| Ex. 14 | 14 | AlSi10Mg | 55B broad | 28 | 55 | 88 | 59% | 90% | 300 |
| Ex. 15 | 15 | AlSi10Mg | 55B broad | 30 | 55 | 84 | 60% | 90% | 300 |
| Ex. 16 | 16 | AlSi10Mg | 55B | 38 | 55 | 78 | 80% | 90% | 300 |
| Ex. 17 | 17 | AlSi10Mg | 55B | 38 | 55 | 78 | 80% | 90% | 300 |
| Ex. 18 | 18 | AlSi10Mg | 55B | 38 | 55 | 78 | 60% | 90% | 600 |
| Ex. 19 | 19 | AlSi10Mg | Classified 40B | 28 | 40 | 60 | 60% | 90% | 350 |

(continued)

| | 3D object forming powder No. | Powder A | | | | | | | |
|---|---|---|---|---|---|---|---|---|---|
| | | Base | Type | D10 | D50 | D90 | Abundance ratio in 3D object forming powder (mass%) | Ratio of particles having sphericity of 0.95 or greater in powder A | Oxygen content (ppm) |
| Ex. 20 | 20 | AlSi10Mg | Classified 40B | 27 | 40 | 60 | 60% | 90% | 350 |
| Ex. 21 | 21 | AlSi10Mg | Classified 70B | 51 | 70 | 106 | 87% | 90% | 300 |
| Ex. 22 | 22 | AlSi10Mg | Classified 70B | 51 | 70 | 106 | 90% | 90% | 300 |

Table 2-2

| | 3D object forming powder No. | Powder A | | | | | | | |
|---|---|---|---|---|---|---|---|---|---|
| | | Base | Type | D10 | D50 | D90 | Abundance ratio in 3D objectforming powder (mass%) | Ratio of particles having sphericity of 0.95 or greater in powder A | Oxygen content (ppm) |
| Ex. 23 | 23 | AlSi10Mg | 55B | 38 | 55 | 78 | 80% | 86% | 300 |
| Ex. 24 | 24 | AlSi10Mg | 55B | 38 | 55 | 78 | 80% | 90% | 300 |
| Ex. 25 | 25 | AlSi10Mg | 55B | 38 | 55 | 78 | 80% | 90% | 300 |
| Ex. 26 | 26 | AlSi10Mg | 55B | 38 | 55 | 78 | 80% | 90% | 300 |
| Ex. 27 | 27 | AlSi5 | 55B | 38 | 55 | 78 | 80% | 90% | 300 |
| Comp. Ex. 1 | 28 | AlSi10Mg | 55B | 38 | 55 | 78 | 80% | 90% | 300 |
| Comp. Ex. 2 | 29 | AlSi10Mg | 55B | 38 | 55 | 78 | 80% | 90% | 300 |
| Comp. Ex. 3 | 30 | AlSi10Mg | Classified 40B | 28 | 38 | 58 | 80% | 90% | 350 |
| Comp. Ex. 4 | 31 | AlSi10Mg | Classified 70B | 52 | 72 | 96 | 80% | 90% | 300 |
| Comp. Ex. 5 | 32 | AlSi10Mg | 55B broad | 23 | 55 | 90 | 60% | 90% | 300 |
| Comp. Ex. 6 | 33 | AlSi10Mg | 55B | 38 | 55 | 78 | 60% | 90% | 620 |
| Comp. Ex. 7 | 34 | AlSi5 | 55B | 38 | 55 | 78 | 80% | 90% | 300 |

Table 3-1

| | 3D object forming powder No. | Powder B | | | | | | | |
|---|---|---|---|---|---|---|---|---|---|
| | | Base | Type | D10 | D50 | D90 | Abundance ratio in 3D object forming powder (mass%) | Ratio of particles having sphericity of 0.95 or greater in powder B | Oxygen content (ppm) |
| Ex. 1 | 1 | AlSi10Mg | 20A | 9 | 23 | 44 | 20% | 84% | 1,000 |
| Ex. 2 | 2 | AlSi10Mg | 15A | 5 | 12 | 25 | 20% | 82% | 1,200 |
| Ex. 3 | 3 | AlSi10Mg | 30A | 15 | 30 | 53 | 20% | 85% | 900 |
| Ex. 4 | 4 | AlSi10Mg | Classified 20A | 10 | 17 | 42 | 20% | 84% | 1,000 |
| Ex. 5 | 5 | AlSi10Mg | Classified 20A | 10 | 14 | 42 | 20% | 84% | 1,000 |
| Ex. 6 | 6 | AlSi10Mg | Classified 20A | 14 | 25 | 50 | 20% | 84% | 1,000 |
| Ex. 7 | 7 | AlSi10Mg | Classified 20A | 15 | 27 | 53 | 20% | 84% | 1,000 |
| Ex. 8 | 8 | AlSi10Mg | 20A | 9 | 23 | 44 | 20% | 84% | 1,000 |
| Ex. 9 | 9 | AlSi10Mg | 20A | 9 | 23 | 44 | 20% | 84% | 1,000 |
| Ex. 10 | 10 | AlSi10Mg | 20A | 9 | 23 | 44 | 20% | 84% | 1,000 |
| Ex. 11 | 11 | AlSi10Mg | 20A | 9 | 23 | 44 | 20% | 84% | 1,000 |
| Ex. 12 | 12 | AlSi10Mg | 20A | 9 | 23 | 44 | 20% | 84% | 1,000 |
| Ex. 13 | 13 | AlSi10Mg | 20A | 9 | 23 | 44 | 20% | 84% | 1,000 |
| Ex. 14 | 14 | AlSi10Mg | 20A broad | 8 | 27 | 60 | 41% | 82% | 1,000 |
| Ex. 15 | 15 | AlSi10Mg | 20A broad | 9 | 26 | 54 | 40% | 82% | 1,000 |
| Ex. 16 | 16 | AlSi10Mg | 20A | 9 | 23 | 44 | 20% | 84% | 1,000 |
| Ex. 17 | 17 | AlSi10Mg | 20A | 9 | 23 | 44 | 20% | 84% | 1,000 |
| Ex. 18 | 18 | AlSi10Mg | 20A | 9 | 23 | 44 | 40% | 84% | 1,300 |
| Ex. 19 | 19 | AlSi10Mg | Classified 20A | 5 | 18 | 35 | 40% | 84% | 1,000 |

(continued)

| | 3D object forming powder No. | Powder B | | | | | | | |
|---|---|---|---|---|---|---|---|---|---|
| | | Base | Type | D10 | D50 | D90 | Abundance ratio in 3D object forming powder (mass%) | Ratio of particles having sphericity of 0.95 or greater in powder B | Oxygen content (ppm) |
| Ex. 20 | 20 | AlSi10Mg | Classified 20A | 3 | 16 | 30 | 40% | 84% | 1,000 |
| Ex. 21 | 21 | AlSi10Mg | Classified 20A | 9 | 23 | 44 | 13% | 84% | 1,000 |
| Ex. 22 | 22 | AlSi10Mg | Classified 20A | 9 | 23 | 44 | 10% | 84% | 1,000 |

Table 3-2

| | 3D object forming powder No. | Powder B | | | | | | | |
|---|---|---|---|---|---|---|---|---|---|
| | | Base | Type | D10 | D50 | D90 | Abundance ratio in 3D object forming powder (mass%) | Ratio of particles having sphericity of 0.95 or greater in powder B | Oxygen content (ppm) |
| Ex. 23 | 23 | AlSi10Mg | 20A | 9 | 23 | 44 | 20% | 84% | 1,000 |
| Ex. 24 | 24 | AlSi10Mg | 20A | 9 | 23 | 44 | 20% | 84% | 1,000 |
| Ex. 25 | 25 | AlSi10Mg | 20B | 19 | 25 | 40 | 20% | 87% | 450 |
| Ex. 26 | 26 | AlSi10Mg | 20A | 9 | 23 | 44 | 20% | 86% | 1,000 |
| Ex. 27 | 27 | AlSi5 | 20A | 9 | 23 | 44 | 20% | 84% | 1,000 |
| Comp. Ex. 1 | 28 | AlSi10Mg | 10A | 4 | 11 | 21 | 20% | 84% | 1,000 |
| Comp. Ex. 2 | 29 | AlSi10Mg | 35A | 19 | 33 | 54 | 20% | 84% | 1,000 |
| Comp. Ex. 3 | 30 | AlSi10Mg | 20A | 9 | 23 | 44 | 20% | 84% | 1,000 |
| Comp. Ex. 4 | 31 | AlSi10Mg | 20A | 9 | 23 | 44 | 20% | 84% | 1,000 |
| Comp. Ex. 5 | 32 | AlSi10Mg | 20A broad | 7 | 27 | 63 | 40% | 82% | 1,000 |
| Comp. Ex. 6 | 33 | AlSi10Mg | 20A | 9 | 23 | 44 | 40% | 84% | 1,400 |
| Comp. Ex. 7 | 34 | AlSi5 | 20A | 9 | 23 | 44 | 20% | 84% | 1,000 |

Table 4-1

| | Powder mix | | | | | | | | |
|---|---|---|---|---|---|---|---|---|---|
| | 3D object forming powder No. | Particle diameter of first peak | Particle diameter of second peak | Ratio | Moisture content (ppm) | Oxygen content (ppm) | Compositions of powder A and powder B | D10 | D90 |
| Ex. 1 | 1 | 18 | 57 | 6.0 | 140 | 440 | Same | 29 | 80 |
| Ex. 2 | 2 | 10 | 57 | 5.2 | 140 | 480 | Same | - | - |
| Ex. 3 | 3 | 30 | 57 | 5.0 | 140 | 420 | Same | - | - |
| Ex. 4 | 4 | 15 | 57 | 6.0 | 140 | 440 | Same | - | - |
| Ex. 5 | 5 | 13 | 57 | 6.0 | 140 | 440 | Same | - | - |
| Ex. 6 | 6 | 25 | 57 | 6.0 | 140 | 440 | Same | - | - |
| Ex. 7 | 7 | 27 | 57 | 6.0 | 140 | 440 | Same | - | - |
| Ex. 8 | 8 | 18 | 40 | 4.5 | 140 | 480 | Same | - | - |
| Ex. 9 | 9 | 18 | 70 | 7.0 | 140 | 440 | Same | - | - |
| Ex. 10 | 10 | 18 | 48 | 4.5 | 140 | 480 | Same | - | - |
| Ex. 11 | 11 | 18 | 50 | 4.5 | 140 | 480 | Same | - | - |
| Ex. 12 | 12 | 18 | 60 | 6.0 | 140 | 440 | Same | - | - |
| Ex. 13 | 13 | 18 | 62 | 6.0 | 140 | 440 | Same | - | - |
| Ex. 14 | 14 | 16 | 55 | 1.5 | 140 | 587 | Same | - | - |
| Ex. 15 | 15 | 16 | 55 | 2.0 | 140 | 580 | Same | - | - |
| Ex. 16 | 16 | 18 | 57 | 6.0 | 180 | 440 | Same | - | - |
| Ex. 17 | 17 | 18 | 57 | 6.0 | 205 | 440 | Same | - | - |
| Ex. 18 | 18 | 18 | 57 | 6.0 | 140 | 950 | Same | - | - |
| Ex. 19 | 19 | 13 | 42 | 2.3 | 140 | 610 | Same | 15 | 59 |
| Ex. 20 | 20 | 11 | 42 | 2.3 | 140 | 610 | Same | 13 | 57 |

(continued)

| | Powder mix | | | | | | | | |
|---|---|---|---|---|---|---|---|---|---|
| | 3D object forming powder No. | Particle diameter of first peak | Particle diameter of second peak | Ratio | Moisture content (ppm) | Oxygen content (ppm) | Compositions of powder A and powder B | D10 | D90 |
| Ex. 21 | 21 | 18 | 70 | 7.0 | 140 | 391 | Same | 43 | 100 |
| Ex. 22 | 22 | 18 | 70 | 7.0 | 140 | 370 | Same | 44 | 103 |

Table 4-2

| | Powder mix | | | | | | | | |
|---|---|---|---|---|---|---|---|---|---|
| | 3D object forming powder No. | Particle diameter of first peak | Particle diameter of second peak | Ratio | Moisture content (ppm) | Oxygen content (ppm) | Compositions of powder A and powder B | D10 | D90 |
| Ex. 23 | 23 | 20 | 57 | 6.0 | 140 | 440 | Same | - | - |
| Ex. 24 | 24 | 20 | 57 | 6.0 | 140 | 440 | Same | - | - |
| Ex. 25 | 25 | 22 | 58 | 6.0 | 140 | 330 | Same | - | - |
| Ex. 26 | 26 | 20 | 57 | 6.0 | 140 | 440 | Same | - | - |
| Ex. 27 | 27 | 20 | 57 | 6.0 | 140 | 440 | Same | - | - |
| Comp. Ex. 1 | 28 | 9 | 57 | 6.0 | 140 | 440 | Same | - | - |
| Comp. Ex. 2 | 29 | 32 | 57 | 6.0 | 140 | 440 | Same | - | - |
| Comp. Ex. 3 | 30 | 18 | 38 | 4.5 | 140 | 480 | Same | - | - |
| Comp. Ex. 4 | 31 | 18 | 72 | 7.0 | 140 | 440 | Same | - | - |
| Comp. Ex. 5 | 32 | 16 | 55 | 1.3 | 140 | 580 | Same | - | - |
| Comp. Ex. 6 | 33 | 18 | 57 | 6.0 | 140 | 990 | Same | - | - |
| Comp. Ex. 7 | 34 | 18 | 57 | 6.0 | 140 | 440 | Different | - | - |

In Tables 4-1 and 4-2, "Ratio" is a ratio (frequency (%) of the peak top of the second peak/frequency (%) of the peak top of the first peak) of the frequencies (%) of the peak tops of the peaks on the volume-based particle size frequency distribution.

Table 5-1

| | 3D object No. | Pre-sintered compact | | Sintered compact No. | Sintered compact | | |
|---|---|---|---|---|---|---|---|
| | | Density | Cracking in removal of resin | | Sintered density | Variance σ of sintered density | Shrinkage |
| Ex. 1 | 1 | Very good | Good | 1 | Very good | Good | Good |
| Ex. 2 | 2 | Good | Good | 2 | Fair | Fair | Good |
| Ex. 3 | 3 | Fair | Good | 3 | Fair | Good | Fair |
| Ex. 4 | 4 | Very good | Good | 4 | Good | Good | Very good |
| Ex. 5 | 5 | Good | Good | 5 | Good | Good | Good |
| Ex. 6 | 6 | Very good | Good | 6 | Good | Good | Very good |
| Ex. 7 | 7 | Good | Good | 7 | Good | Good | Good |
| Ex. 8 | 8 | Fair | Good | 8 | Fair | Good | Fair |
| Ex. 9 | 9 | Very good | Good | 9 | Very good | Fair | Good |
| Ex. 10 | 10 | Fair | Good | 10 | Good | Good | Fair |
| Ex. 11 | 11 | Good | Good | 11 | Good | Good | Good |
| Ex. 12 | 12 | Very good | Good | 12 | Very good | Good | Good |
| Ex. 13 | 13 | Very good | Good | 13 | Very good | Fair | Good |
| Ex. 14 | 14 | Fair | Good | 14 | Fair | Fair | Fair |
| Ex. 15 | 15 | Good | Good | 15 | Good | Fair | Fair |
| Ex. 16 | 16 | Good | Good | 16 | Good | Good | Good |
| Ex. 17 | 17 | Fair | Good | 17 | Fair | Good | Fair |
| Ex. 18 | 18 | Very good | Good | 18 | Fair | Good | Good |
| Ex. 19 | 19 | Good | Good | 19 | Good | Good | Fair |
| Ex. 20 | 20 | Fair | Good | 20 | Fair | Fair | Fair |
| Ex. 21 | 21 | Very good | Good | 21 | Very good | Fair | |

(continued)

| | 3D object No. | Pre-sintered compact | | Sintered compact No. | Sintered compact | | |
|---|---|---|---|---|---|---|---|
| | | Density | Cracking in removal of resin | | Sintered density | Variance σ of sintered density | Shrinkage |
| Ex. 22 | 22 | Good | Good | 22 | | Fair | Fair |

Table 5-2

| | 3D object No. | Pre-sintered compact | | Sintered compact No. | Sintered compact | | |
|---|---|---|---|---|---|---|---|
| | | Density | Cracking in removal of resin | | Sintered density | Variance σ of sintered density | Shrinkage |
| Ex. 23 | 23 | Very good | Good | 23 | Very good | Good | Good |
| Ex. 24 | 24 | Good | Good | 24 | Very good | Good | Good |
| Ex. 25 | 25 | Good | Good | 25 | Very good | Good | Good |
| Ex. 26 | 26 | Very good | Good | 26 | Very good | Good | Good |
| Ex. 27 | 27 | Very good | Good | 27 | Very good | Good | Good |
| Comp. Ex. 1 | 28 | Fair | Good | 28 | Not good | Not good | Fair |
| Comp. Ex. 2 | 29 | Not good | Not good | 29 | Fair | Fair | Fair |
| Comp. Ex. 3 | 30 | Not good | Not good | 30 | Fair | Fair | Fair |
| Comp. Ex. 4 | 31 | Very good | Not good | 31 | Very good | Not good | Good |
| Comp. Ex. 5 | 32 | Not good | Not good | 32 | Fair | Fair | Fair |
| Comp. Ex. 6 | 33 | Very good | Good | 33 | Not good | Not good | Fair |
| Comp. Ex. 7 | 34 | Very good | Good | 34 | Good | Not good | Good |

The pre-sintered compacts of the 3D objects 1 to 27 produced in Examples 1 to 27 all had the density evaluation results of "Fair" or better, and the cracking (during removal of resin) evaluation of "Good." Moreover, the evaluation results of the density, variance of density, and shrinkage of the sintered compacts 1 to 27 in Examples 1 to 27 were all "Fair" or better.

Conversely, the sintered compact 28 produced in Comparative Example 1 had the evaluation results of "Not good" in the evaluations of density and variance of density.

The pre-sintered compacts of the 3D objects 29, 30, and 32 produced in Comparative Examples 2, 3, and 5 had the evaluation results of "Not good" in the evaluation of density and cracking during removal of resin.

The pre-sintered compact of the 3D object 31 produced in Comparative Example 4 had the evaluation result of "Not good" in the evaluation of cracking during removal of resin, and the sintered compact 31 had the evaluation result of "Not good" in the evaluation of variance of density.

The sintered compact 33 produced in Comparative Example 6 had the evaluation results of "Not good" in the evaluations of density and variance of density.

The sintered compact 34 produced in Comparative Example 7 had the evaluation result of "Not good" in the

evaluation of variance of density.

As demonstrated above, it was found that a 3D object having a high density and high precision could be obtained using the powder for forming 3D objects satisfying the features of the present disclosure.

For example, embodiments of the present disclosure are as follows.

<1> A powder for forming 3D objects, including:
a group of particles having an identical composition, the group of the particles including 50% by mass or greater of aluminum and an oxygen content of the group of the particles being 950 ppm or less,

wherein a volume-based particle size frequency distribution of the powder for forming 3D objects has a peak top in a particle diameter range of 40 μm or greater and 70 μm or less, and a peak top in a particle diameter range of 10 μm or greater and 30 μm or less, and
a ratio (a frequency (%) of the peak top in the particle diameter range of 40 μm or greater and 70 μm or less)/(a frequency (%) of the peak top in the particle diameter range of 10 μm or greater and 30 μm or less) is 1.5 or greater.

<2> The powder for forming 3D objects according to <1>,
wherein the powder for forming 3D objects has D10 of 10 μm or greater and 45 μm or less, and D90 of 55 μm or greater and 105 μm or less.
<3> The powder for forming 3D objects according to <1> or <2>,
wherein within the group of the particles of the powder for forming 3D objects, an abundance ratio of the particles having a volume mean diameter of 40 μm or greater and 70 μm or less is 60% by mass or greater and 95% by mass or less, and an abundance ratio of the particles having a volume mean diameter of 12 μm or greater and 30 μm or less is 5% by mass or greater and 40% by mass or less.
<4> The powder for forming 3D objects according to any one of <1> to <3>,
wherein a moisture content of the powder for forming 3D objects is 180 ppm or less.
<5> The powder for forming 3D objects according to one of <1> to <4>,
wherein the group of the particles of the powder for forming 3D objects is a group of particles of aluminum alloy including at least one selected from the group consisting of Si, Mg, Bi, Sn, Cu, Fe, and Sb.
<6> The powder for forming 3D objects according to any one of <1> to <5>,
wherein the group of the particles of the powder for forming 3D objects includes a first powder including particles having a volume mean diameter of 40 μm or greater and 70 μm or less, and a second powder including particles having a volume mean diameter of 12 μm or greater and 30 μm or less.
<7> The powder for forming 3D objects according to <6>,

wherein 88% or greater of the particles of the first powder have sphericity of 0.95 or greater, and
less than 86% of the particles of the second powder have sphericity of 0.95 or greater.

<8> The powder for forming 3D objects according to <6> or <7>,
wherein the first powder has D10 of 28 μm or greater and 51 μm or less, and the second powder has D90 of 25 μm or greater and 60 μm or less.
<9> The powder for forming 3D objects according to any one of <6> to <8>,
wherein an oxygen content of the first powder is 600 ppm or less, and an oxygen content of the second powder is 1,300 ppm or less.
<10> A method for producing a 3D object, the method including:

forming a powder layer using the powder for forming 3D objects according to any one of <1> to <9>;
applying a modeling liquid to the powder layer; and
repeating the formation of the powder layer and the application of the modeling liquid to form a multilayer stack,
wherein the modeling liquid includes a resin and an organic solvent, and the modeling liquid is substantially free from water.

<11> The method according to <10>,
wherein the applying the modeling liquid includes ejecting the modeling liquid by inkjet printing.
<12> The method according to <10> or <11>, further including:

heating the multilayer stack to form a compact; and
removing excess powder deposited on the compact.

<13> The method according to any one of <10> to <12>, further including:

heating the compact to remove the resin in the compact to form a resin-removed compact; and
heating the resin-removed compact to sinter the resin-removed compact.

## Claims

1. A powder for forming 3D objects, comprising:
a group of particles having an identical composition, the group of the particles including 50% by mass or greater of aluminum and an oxygen content of the group of the particles being 950 ppm or less,

    wherein a volume-based particle size frequency distribution of the powder for forming 3D objects has a peak top in a particle diameter range of 40 μm or greater and 70 μm or less, and a peak top in a particle diameter range of 10 μm or greater and 30 μm or less, and
    a ratio (a frequency (%) of the peak top in the particle diameter range of 40 μm or greater and 70 μm or less)/(a frequency (%) of the peak top in the particle diameter range of 10 μm or greater and 30 μm or less) is 1.5 or greater.

2. The powder for forming 3D objects according to claim 1,
wherein the powder for forming 3D objects has D10 of 10 μm or greater and 45 μm or less, and D90 of 55 μm or greater and 105 μm or less.

3. The powder for forming 3D objects according to claim 1 or 2,
wherein within the group of the particles of the powder for forming 3D objects, an abundance ratio of the particles having a volume mean diameter of 40 μm or greater and 70 μm or less is 60% by mass or greater and 95% by mass or less, and an abundance ratio of the particles having a volume mean diameter of 12 μm or greater and 30 μm or less is 5% by mass or greater and 40% by mass or less.

4. The powder for forming 3D objects according to any one of claims 1 to 3,
wherein a moisture content of the powder for forming 3D objects is 180 ppm or less.

5. The powder for forming 3D objects according to any one of claims 1 to 4,
wherein the group of the particles of the powder for forming 3D objects is a group of particles of aluminum alloy including at least one selected from the group consisting of Si, Mg, Bi, Sn, Cu, Fe, and Sb.

6. The powder for forming 3D objects according to any one of claims 1 to 5,
wherein the group of the particles of the powder for forming 3D objects includes a first powder including particles having a volume mean diameter of 40 μm or greater and 70 μm or less, and a second powder including particles having a volume mean diameter of 12 μm or greater and 30 μm or less.

7. The powder for forming 3D objects according to claim 6,

    wherein 88% or greater of the particles of the first powder have sphericity of 0.95 or greater, and
    less than 86% of the particles of the second powder have sphericity of 0.95 or greater.

8. The powder for forming 3D objects according to claim 6 or 7,
wherein the first powder has D10 of 28 μm or greater and 51 μm or less, and the second powder has D90 of 25 μm or greater and 60 μm or less.

9. The powder for forming 3D objects according to any one of claims 6 to 8,
wherein an oxygen content of the first powder is 600 ppm or less, and an oxygen content of the second powder is 1,300 ppm or less.

10. A method for producing a 3D object, the method comprising:

    forming a powder layer using the powder for forming 3D objects according to any one of claims 1 to 9;
    applying a modeling liquid to the powder layer; and
    repeating the formation of the powder layer and the application of the modeling liquid to form a multilayer stack,

wherein the modeling liquid includes a resin and an organic solvent, and the modeling liquid is substantially free from water.

**11.** The method according to claim 10,
wherein the applying the modeling liquid includes ejecting the modeling liquid by inkjet printing.

**12.** The method according to claim 10 or 11, further comprising:

heating the multilayer stack to form a compact; and
removing excess powder deposited on the compact.

**13.** The method according to claim 12, further comprising:

heating the compact to remove the resin in the compact to form a resin-removed compact; and
heating the resin-removed compact to sinter the resin-removed compact.

FIG.1A

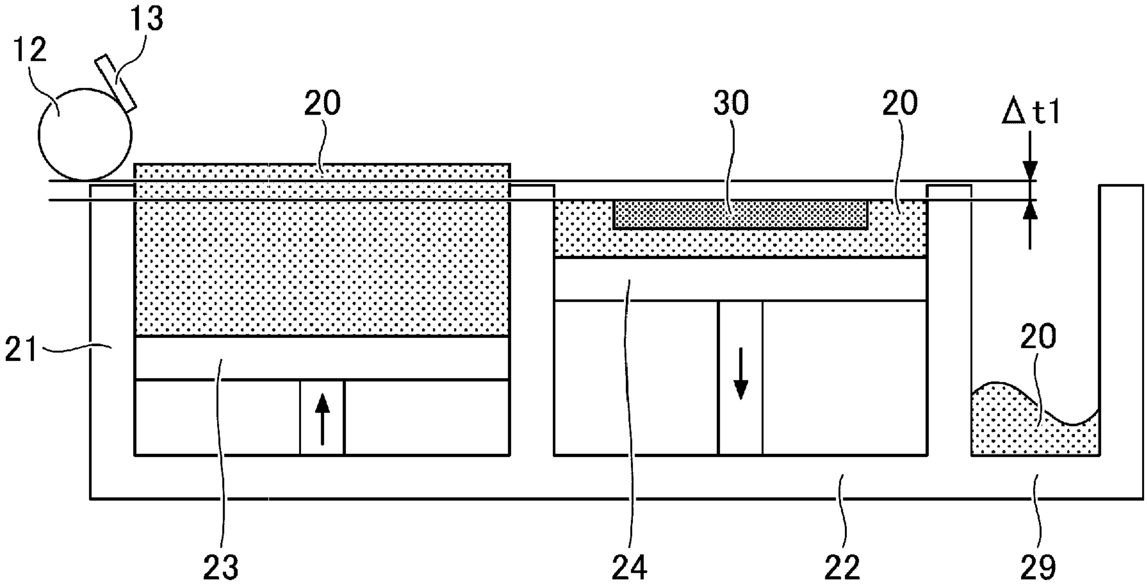


FIG.1B

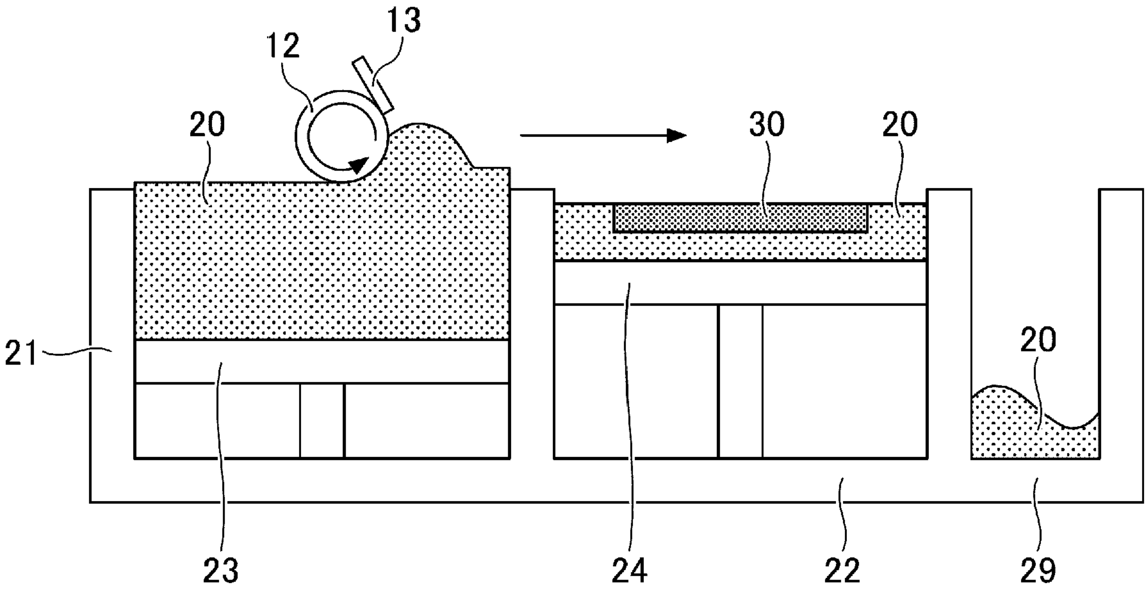

FIG.1C

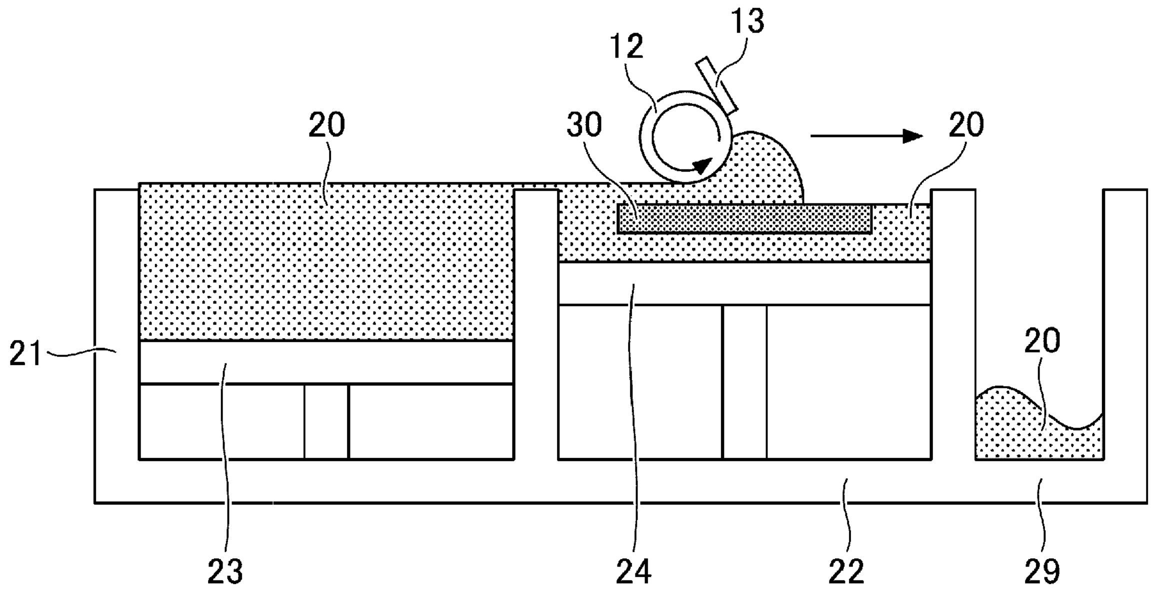


FIG.1D

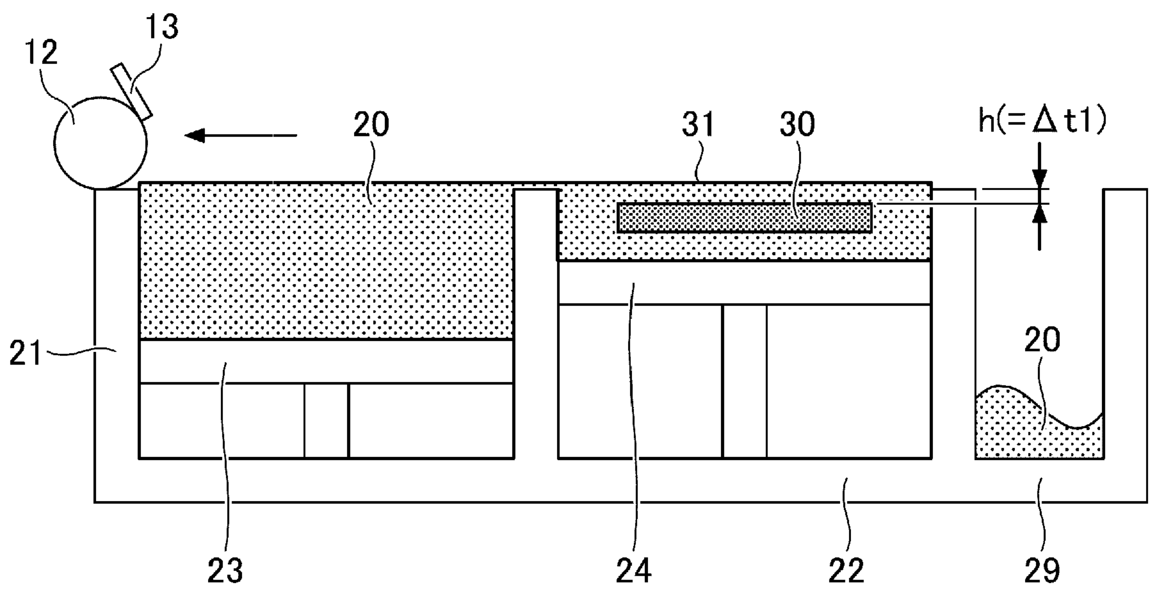

FIG.1E

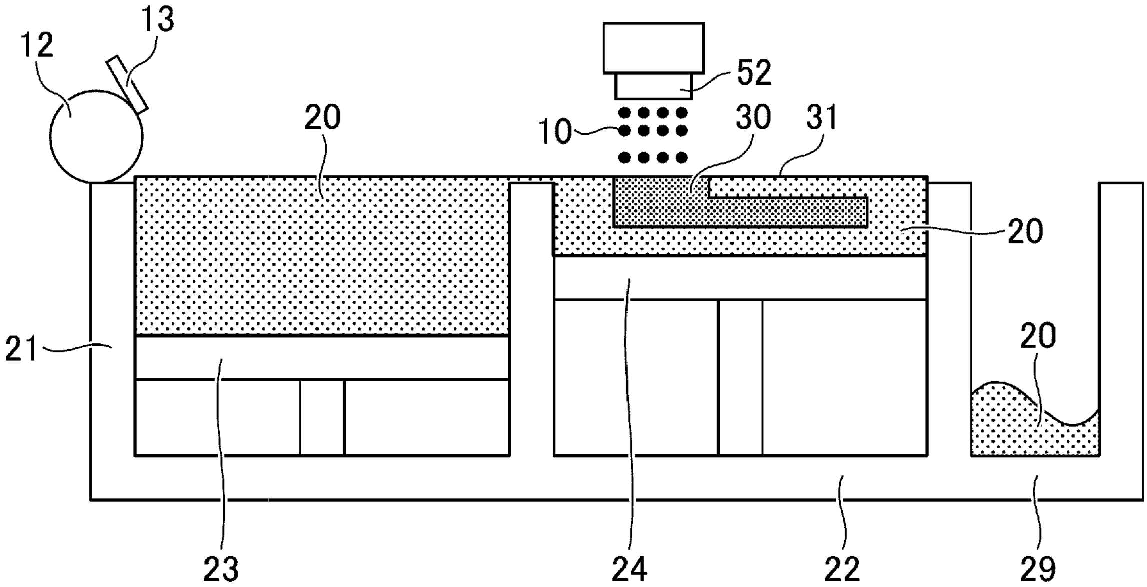

Europäisches Patentamt
European Patent Office
Office européen des brevets

# EUROPEAN SEARCH REPORT

Application Number
EP 24 16 2869

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br><br><br><br><br><br>A | JOHN H. MARTIN ET AL: "3D printing of high-strength aluminium alloys",<br>NATURE,<br>vol. 549, no. 7672,<br>20 September 2017 (2017-09-20), pages 365-369, XP055409795,<br>DOI: 10.1038/nature23894<br>* abstract *<br>* section Methods - Materials *<br>----- | 1-9<br><br><br><br><br><br><br>10-13 | INV.<br>B22F1/052<br>B33Y70/00<br>C22C1/04<br>C22C21/02<br><br>ADD.<br>B22F10/14<br>B33Y10/00<br>B22F1/103<br>B22F10/68 |
| A | MOSTAFAEI AMIR ET AL: "Binder jet 3D printing-Process parameters, materials, properties, modeling, and challenges",<br>PROGRESS IN MATERIALS SCIENCE.,<br>vol. 119, 15 June 2020 (2020-06-15), page 100707, XP093015322,<br>GB<br>ISSN: 0079-6425, DOI: 10.1016/j.pmatsci.2020.100707<br>* section 2.2.1 *<br>* figures 6, 10 *<br>----- | 1-13 | |
| | | | TECHNICAL FIELDS SEARCHED (IPC) |
| A | EP 3 311 984 A1 (RICOH CO LTD [JP])<br>25 April 2018 (2018-04-25)<br>* paragraph [0025] *<br>* claims 1-4 *<br>----- | 1-13 | B22F<br>C22C<br>B33Y |
| T | Mina L. Soriano: "Separation of a Mixture Distribution Into Its Gaussian Components",<br>ICLARM Contribution No. 456,<br>1 April 1990 (1990-04-01), pages 35-40, XP055279849,<br>Retrieved from the Internet:<br>URL:http://pubs.iclarm.net/Naga/FB_3102.pdf<br>[retrieved on 2016-06-13]<br>* the whole document *<br>----- | 6-9 | |

The present search report has been drawn up for all claims

1

| Place of search | Date of completion of the search | Examiner |
|---|---|---|
| The Hague | 5 July 2024 | Järvi, Tommi |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 24 16 2869

This annex lists the patent family members relating to the patent documents cited in the above-mentioned European search report. The members are as contained in the European Patent Office EDP file on
The European Patent Office is in no way liable for these particulars which are merely given for the purpose of information.

05-07-2024

| Patent document cited in search report | Publication date | Patent family member(s) | Publication date |
|---|---|---|---|
| EP 3311984 A1 | 25-04-2018 | EP 3311984 A1 | 25-04-2018 |
| | | JP 2018066049 A | 26-04-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 4206476 B